# EUROPÄISCHE PATENTSCHRIFT

(11) **EP 2 308 007 B1**
(45) Veröffentlichungstag und Bekanntmachung des Hinweises auf die Patenterteilung: **10.09.2014**
(21) Anmeldenummer: 09771827.4
(22) Anmeldetag: 17.06.2009
(51) Int. Cl.: G07F 19/00, G06K 7/08

(54) **VERFAHREN UND VORRICHTUNG ZUR ABSICHERUNG EINER LESEVORRICHTUNG FÜR KARTENFÖRMIGE DATENTRÄGER GEGEN UNERLAUBTES AUSWERTEN ODER KOPIEREN VON MAGNETISCH CODIERTEN DATEN EINES ZUGEFÜHRTEN KARTENFÖRMIGEN DATENTRÄGERS**
METHOD AND DEVICE FOR PROTECTING A READING DEVICE FOR CARD-SHAPED DATA CARRIERS FROM UNAUTHORIZED EVALUATION OR COPYING OF MAGNETICALLY ENCODED DATA OF AN INSERTED CARD-SHAPED DATA CARRIER
PROCÉDÉ ET DISPOSITIF POUR SÉCURISER UN DISPOSITIF DE LECTURE DE SUPPORTS DE DONNÉES EN FORME DE CARTES, CONTRE UNE UTILISATION OU UNE COPIE NON AUTORISÉE DE DONNÉES CODÉES MAGNÉTIQUEMENT D'UN SUPPORT DE DONNÉES EN FORME DE CARTE UTILISÉ DANS LE DISPOSITIF DE LECTURE

(30) Priorität: 18.06.2008 AT 9702008
(43) Veröffentlichungstag der Anmeldung: 13.04.2011
(73) Patentinhaber: KEBA AG, A-4041 Linz (AT)
(72) Erfinder: LEHNER, Christian, A-4490 St. Florian (AT)
(74) Vertreter: Burger, Hannes
(86) Internationale Anmeldenummer: PCT/AT2009/000241
(87) Internationale Veröffentlichungsnummer: WO 2010/000004

(56) Entgegenhaltungen:
- EP-A- 1 067 474
- EP-A- 1 798 662
- WO-A-2007/048649
- DE-U1-202005 021 134
- JP-A- 2001 067 524
- SVIGALS J: "Unauthorized Card Stripe Reading Inhibitor" IBM TECHNICAL DISCLOSURE BULLETIN, IBM CORP. NEW YORK, US, Bd. 26, Nr. 6, 1. November 1983 (1983-11-01), Seite 2707, XP002145300 ISSN: 0018-8689

## Beschreibung

Die Erfindung betrifft Verfahren und Vorrichtungen zur Abwehr des unerlaubten und unbemerkten Auswertens oder Kopierens von auf kartenförmigen magnetischen Datenträgern gespeicherten Informationen, wie dies in den Ansprüchen 1, 14, 24 und 26 angegeben ist.

Insbesondere in Verbindung mit Geldkarten kommt es immer wieder vor, dass Geldautomaten oder ähnliche Dienstleistungsautomaten, welche mit entsprechenden Lesevorrichtungen für solche Geldkarten ausgestattet sind, durch unbefugte Dritte in betrügerischer Absicht derart manipuliert werden, dass bei der ordnungsgemäßen Verwendung dieser Automaten durch einen gutgläubigen Benutzer, die auf der Magnetspur des kartenförmigen Datenträgers aufgezeichneten Daten in krimineller Absicht unbemerkt mitgelesen werden. Zu diesem Zweck wird beispielsweise vor der Öffnung zum Zuführen der Magnetkarte ein zusätzlicher Lesekopf unauffällig angebracht, welcher dann beim Zuführen der Karte die darauf gespeicherten Daten unbemerkt erfasst. Diese Daten werden gespeichert und nachträglich zur Anfertigung einer Kartenkopie mit identischen Daten missbraucht. Ein gegebenenfalls erforderlicher PIN-Code wird dann zumeist bei der Eingabe auf einem Bedienterminal beobachtet oder mitgefilmt. Diese Informationen werden dann von den Kriminellen in Verbindung mit einer Kartenkopie betrügerisch verwendet.

Bei Lesevorrichtungen an Geldautomaten wurden daher fallweise bauliche Maßnahmen im Bereich des Kartenlesermauls, insbesondere Vorbauten vor dem Kartenleserschlitz, oder aufwändige und teure Überwachungseinrichtungen vorgesehen, welche das erfolgreiche Anbringen von mitlesenden Einrichtungen erschweren sollen. Diese Maßnahmen sind jedoch nur bedingt zufriedenstellend.

Darüber hinaus ist aus der DE 20 2005 021 134 U1 eine Ausführung bekannt, bei welcher im Bereich der Einzugsöffnung eines Kartenlesers ein magnetisches Störfeld generiert wird, sodass die Erfassung der Kartendaten via einen in diesem Bereich illegal angebrachten Lesekopf gestört wird. Folglich kann ein Mitlesen, Aufzeichnen und Reproduzieren der Daten nicht zu einer identischen bzw. brauchbaren Kopie der Originalkarte führen. Gemäß dieser bekannten Ausführungsform wird im Bereich des Kartenlesermauls eine Magnetspule angebracht, welche mit einem entsprechenden Frequenzgenerator gespeist wird, sodass im Bereich vor dem Kartenlesermaul ein magnetisches Störfeld gebildet wird, welches einen manipulatorisch angebrachten Lesekopf entsprechend stört. Nachteilig an dieser bekannten Ausführung ist vor allem, dass das magnetische Störfeld der Spule nicht nur einen in betrügerischer Absicht vor dem Kartenlesermaul angebrachten Lesekopf stört, sondern ebenso den ordnungsgemäßen Lesekopf des eigentlichen Kartenlesers. In der Praxis wird diesem Problem derzeit damit begegnet, dass Kartenleser mit relativ tiefer Bauart verwendet werden, bei denen der Lesekopf im Inneren des Kartenlesers entsprechend weit vom Kartenlesermaul beabstandet ist. Außerdem wird das Störfeld abgeschaltet, sobald eine zugefiihrte Karte vollständig im Kartenleser verschwunden ist und damit außerhalb des Erfassungsbereiches eines manipulatorisch angebrachten, außerhalb des Kartenlesers positionierten Lesekopfes liegt. Diese Maßnahmen sind jedoch nur zusammen mit einer begrenzten Auswahl von Kartenlesern mit ausreichend tiefer Bauart möglich, insbesondere bei Kartenlesern bei denen die Karte vollständig im Lesermaul verschwindet, bevor der Magnetstreifen der Karte den internen bzw. ordnungsgemäßen Lesekopf erreicht. Vor allem bei den für Zutrittssysteme favorisierten Kartenlesern mit kurzer Bauart, bei denen der interne, ordnungsgemäße Lesekopf vergleichsweise nahe am Kartenlesermaul angeordnet ist, sind diese Abhilfen nicht möglich. Insbesondere bei Stecklesern oder Durchzugslesern scheitern diese behelfsmäßigen Maßnahmen in der Regel völlig.

Aufgabe der gegenständlichen Erfindung ist die Schaffung von Verfahren und Vorrichtungen, mit welchen die unerlaubte Erfassung von magnetisch codierten Daten auf kartenförmigen Datenträgern im Bereich der Lesevorrichtungen für diese Datenträger zuverlässig und mit hoher Manipulationssicherheit unterbunden werden kann.

Unabhängig davon liegt eine Aufgabe der gegenständlichen Erfindung darin, eine Ausführung zu schaffen, bei welcher der Einfluss des Störfeldes nicht mit einfachen Mitteln aus dem Ausgangs- bzw. Summensignal eines mitlesenden, illegalen Lesekopfes herausgefiltert werden kann.

Losgelöst von den obigen Aufgaben besteht eine unabhängige Aufgabe der Erfindung darin, Maßnahmen anzugeben, mit welchen betrügerische Manipulationen im Nahbereich der Lesevorrichtung zuverlässig erkannt werden.

Die erstgenannte Aufgabe der Erfindung wird durch die in Anspruch 1 oder 14 angegebenen Maßnahmen gelöst.

Vorteilhaft ist dabei, dass eine entsprechend diesem Verfahren betriebene bzw. arbeitende Lesevorrichtung erhöhte Sicherheit gegenüber betrügerischen Manipulationen bietet. Unter anderem muss nämlich das Störfeld nicht mehr deaktiviert werden, während der magnetische Datenträger den internen bzw. autorisierten Magnetfeldlesekopf der Lesevorrichtung passiert. Insbesondere kann das Störfeld auch während der Lesephase für die auf dem Datenträger enthaltenen Informationen bzw. Daten aktiviert bleiben, weil der Einfluss des Störfeldes zu jedem Zeitpunkt signaltechnisch kompensiert wird. Der Einsatz eines elektromagnetischen Störfeldes ist somit auch bei Lesevorrichtungen mit relativ kurzer Bauweise ermöglicht. Insbesondere können die Daten des Datenträgers bereits gelesen werden, während ein Teilabschnitt des kartenförmigen Datenträgers noch aus der Lesevorrichtung herausragt und damit einem unter Umständen betrügerisch angebrachten Lesekopf noch zugänglich ist. Das heißt, die erfindungsgemäßen Abwehrmaßnahmen können auch bei Lesevorrichtungen mit kurzem, automatisierten Transportweg für den kartenförmigen Datenträger und auch bei so genannten Stecklesern oder Durchzugslesern mit manueller Zufuhr bzw. Relativbewegung des Datenträgers problemlos angewandt werden. Ein betrügerisch angebrachter Lesekopf wird also zu jedem relevanten Zeitpunkt mit dem Störfeld beaufschlagt, ohne dass für diesen betrügerisch angebrachten Lesekopf die Möglichkeit einer signaltechnischen Kompensation besteht, sodass ein unerlaubtes Erfassen, Auswerten oder Kopieren von nutzungsrelevanten Daten zuverlässig vereitelt wird.

Bei den Maßnahmen gemäß Anspruch 2 ist von Vorteil, dass das entstörte Nutzsignal, welches sich aus dem Magnetfeld des kartenförmigen Datenträgers ableitet, rechnerisch bzw. durch eine digitale Signalverarbeitung wiederhergestellt wird, sodass eine besonders rasche und zuverlässige bzw. exakte Rekonstruierung des Nutzsignals erreicht werden kann. Wesentlich ist weiters, dass mit dem signaltechnischen Modell der Störfeldeinfluss für jeden beliebigen Verlauf des Störfelds bzw. für willkürliche und quasi zufällige Verläufe des die Störfeldspule speisenden Störsteuersignals berechnet werden kann. Anders als bei Verwendung eines periodischen Störsignals gemäß dem Stand der Technik ist es bei Verwendung eines quasi zufälligen Störsteuersignals nicht mehr möglich, alleinig aus dem Signal des betrügerisch angebrachten Lesekopfes die ungestörten Signalanteile, d.h. die entstörten Nutzsignalanteile zu rekonstruieren. Darauf abgestellte betrügerische Manipulationen und Erfassungsversuche führen somit nicht mehr zur Erlangung der relevanten Kartendaten bzw. Informationen.

Durch die Maßnahmen gemäß Anspruch 3 ist sichergestellt, dass die Wirkung des magnetischen Störfeldes auch im Ausgangssignal des autorisierten Magnetfeldlesekopfes erkennbar ist und dadurch sowohl das grundsätzliche Vorhandensein als auch etwaige Veränderungen des Störfeldes erfassbar sind.

Gemäß der vorteilhaften Weiterbildung nach Anspruch 4 ist vorgesehen, ein stochastisches, d.h. ein zufälliges Störsteuersignal bzw. ein Störfeld mit einem zufälligen zeitlichem Verlauf zu verwenden. Während nämlich der Einfluss eines periodischen Störsignals auf das Signal eines betrügerisch angebrachten Lesekopfes vergleichsweise einfach wieder herausgefiltert werden kann und somit die ungestörten Signalinformationen wieder hergestellt werden können, ist dies bei Verwendung eines quasi zufälligen Störsteuersignals nicht ohne weiters möglich.

Durch die Maßnahmen gemäß Anspruch 5 wird in praktikabler Art und Weise ein Störsteuersignal generiert, welches gute stochastische Eigenschaften aufweist. Damit ist es auch durch eine langfristige Aufzeichnung des von einem betrügerisch positionierten, mitlesenden Lesekopfes gelieferten Signals, welches durch additive Überlagerung des Störfeldes und der Nutzdaten des Magnetstreifens gebildet wird, nicht mehr möglich, verwertbare Signale bzw. Informationen oder Daten zu erhalten und zum Herstellen einer Kartenkopie zu missbraüchen.

Durch die Maßnahmen gemäß Anspruch 6 ist es ermöglicht, auch stochastische Störsteuersignale bzw. Störfelder einzusetzen und diese auf Regellosigkeit basierenden Störeinflüsse ausschließlich durch die integrale Signalverarbeitung innerhalb der Lesevorrichtung wieder zu kompensieren. Für quasi externe bzw. illegale Magnetfeldleseköpfe liegt hingegen eine Mischform aus dem Störfeld und dem Magnetfeld des Datenträgers vor und kann eine Splittung bzw. Auftrennung der jeweiligen Signalanteile ohne Kenntnis über den Verlauf des stochastischen Störsteuersignals nicht vorgenommen werden.

Bei den Maßnahmen gemäß den Ansprüchen 7 oder 8 ist von Vorteil, dass quasi vorausberechnet werden kann, wie ein emittiertes Störsteuersignal nach der Übertragung über die Übertragungsstrecke und nach dessen Wiederaufnahme aussehen wird bzw. verändert sein wird. Somit ist es möglich, beliebige Signalformen zu generieren, über die Übertragungsstrecke zu übertragen und nachfolgend die Störsignalanteile bzw. die Störeinflüsse des Störsteuersignals herauszurechnen und ein Nutzsignal zu rekonstruieren, welches einem Signal entspricht, das ohne die Wirkung eines Störfelds erfasst worden wäre. Insbesondere können dadurch die Signalverfälschungen im Ausgangs- bzw. Summensignal des internen bzw. legalen Magnetfeldlesekopfes auch dann vollständig eliminiert werden, wenn komplexe, insbesondere stochastische Störsteuersignale übertragen werden.

Durch die Maßnahme gemäß Anspruch 9 können auch besonders komplexe Übertragungscharakteristiken abgebildet werden. Wesentlich ist dabei, dass das Modellfilter so genau an das reale Übertragungsverhalten anpassbar ist, und dass an seinem Ausgang nahezu das gleiche Signal erhalten wird, wie es am Ausgang des autorisierten Magnetfeldlesekopfes bzw. als korrespondierende Folge von Abtastwerten am Ausgang eines nachgeschalteten AD-Wandlers vorliegt, wenn kein kartenförmiger Datenträger gelesen wird, also nur das Störfeld auf den autorisierten Magnetfeldlesekopf einwirkt. Durch einfache Subtraktionen, kann folglich das Störsignal von einem Gesamt- bzw. Summensignal des Magnetfeldlesekopfes entfernt und das verbleibende Signal als rekonstruiertes Nutzsignal weiterverarbeitet werden.

Durch die Maßnahmen gemäß Anspruch 10 besteht zu keinem Zeitpunkt die Gefahr, dass die nutzungsrelevanten Signale bzw. Daten des Datenträgers in unbefugter Weise erfasst werden. Insbesondere ist kein Zeitfenster gegeben, in welchem es möglich wäre, ein quasi reines Signal ausgehend vom Datenträger mit den magnetisch codierten Daten zu erlangen. Die Betrugs- bzw. Manipulationssicherheit ist dadurch in hohem Ausmaß verbessert.

Bei den Maßnahmen gemäß Anspruch 11 ist von Vorteil, dass betrügerische Manipulationen oder auch zeitabhängige bzw. alterungsbedingte Defekte automatisiert erkannt werden können. Ein Vorteil dieser Lösung ist unter anderem, dass beim manipulativen Anbringen, Entfernen oder Verändern von magnetisch und/oder elektrisch leitfähigen Teilen im Einflussbereich der Störfeldspule die Magnetfeldlinien und das Übertragungsverhalten der Störfeldspule auf den internen Magnetfeldlesekopf der Lesevorrichtung verändert werden. Gleichzeitig steht aber vor allem mit einem signaltechnischen Modell eine Vergleichsgröße für den Ursprungs- bzw. Sollzustand zu Verfügung. Dies bedeutet, dass durch im Bereich der Lesevorrichtung bzw. dessen Störfeldspule manipulatorisch angebrachte, modifizierte oder aus diesem Bereich entfernte magnetisch wirksame Teile das zuvor ermittelte signaltechnische Modell nicht mehr mit den realen bzw. tatsächlich auftretenden Übertragungsverhältnissen übereinstimmt. Diese Abweichung kann ab einem bestimmten Ausmaß als Kennzeichen für eine betrügerische Manipulation gewertet werden und die Lesevorrichtung bzw. eine sonstige periphere Einheit, insbesondere ein damit ausgestatteter Automat, kann daraufhin außer Betrieb genommen werden, sowie gegebenenfalls Alarm ausgelöst werden. Entsprechendes gilt im Falle eines einfachen technischen Defekts, welcher die Wirkung bzw. das Verhalten der Übertragungsstrecke verändert. Dies kann beispielsweise bei einer Veränderung der Charakteristik der Störfeldspule oder des internen, autorisierten Magnetfeldlesekopfes der Fall sein. Es kann also auch ein technischer Defekt des Magnetfeldlesekopfes der Lesevorrichtung durch diese Maßnahmen automatisch erkannt und gemeldet werden.

Bei den Maßnahmen gemäß Anspruch 12 ist von Vorteil, dass das digitale Filter auch nach einem initialen Kalibriervorgang bzw. nach einem anfänglichen Setup weiterhin mit geringer Adaptionsgeschwindigkeit adaptiert wird. Das heißt, dass die Filterkoeffizienten des signaltechnischen Modells an ein sich langsam veränderndes Übertragungsverhalten automatisch angepasst werden. Auch ohne manipulatorische Eingriffe kann es nämlich im normalen Betrieb zu geringen bzw. schleichenden Änderungen des Übertragungsverhaltens kommen. Dies kann beispielsweise durch temperatur- oder alterungsbedingte Änderungen von Bauteilkenngrößen hervorgerufen werden. Durch die fortlaufende Adaption des Modellfilters ist sichergestellt, dass auch bei geringen Änderungen des Übertragungsverhaltens der Störfeldeinfluss auf den Magnetfeldlesekopf der Lesevorrichtung stets optimal kompensiert wird und keine vom Störfeld verursachte Beeinträchtigung der Lesequalität eintritt. Auch für die Adaption des Modellfilters ist die Verwendung eines stochastischen Testsignals besonders günstig, was sich mit den Bedürfnissen zur Abwehr eines nicht autorisierten Erfassungsversuchs sehr gut deckt.

Bei den Maßnahmen gemäß Anspruch 13 ist von Vorteil, dass das Rekonstruieren des Nutzsignals basierend auf dem Signal eines manipulatorisch angebrachten Magnetfeldlesekopfes zusätzlich erschwert wird. Insbesondere kann durch diese zusätzliche Signalkomponente eine Unterscheidung bzw. signalverarbeitungstechnische Abtrennung des Nutzsignals, welches vom Datenträger stammt, zusätzlich erschwert werden. Nicht autorisierte Erfassungsversuche, welche bei der Aufbereitung des erfassten Signals auf das Erkennen bestimmter typischer Signalformen abgestellt sind, werden so zuverlässig unterbunden.

Die Aufgabe der Erfindung wird aber auch durch eine Vorrichtung gemäß Anspruch 14 gelöst.

Die mit dieser Vorrichtung erzielbaren Vorteile bzw. Effekte korrelieren im Wesentlichen mit den Vorteils- bzw. Effektangaben zu den Verfahrensmaßnahmen gemäß Anspruch 1. Insbesondere wird dadurch erreicht, dass der Einfluss der Störfeldspule auf den Magnetfeldlesekopf des Kartenlesers zu jedem Zeitpunkt kompensiert werden kann und somit das eigentliche Nutzsignal, welches von einem zugeführten, kartenförmigen Datenträger stammt, zuverlässig extrahiert werden kann. Dadurch ist die durchgehende Erhaltung des Störmagnetfeldes sowie die Verwendung komplexer Störsteuersignale und der Aufbau kompakter Lesevorrichtungen möglich. Die damit einhergehende, besonders hohe Manipulations- bzw. Betrugssicherheit einer derart ausgestatteten Lesevorrichtung kann dabei in einfacher Art und Weise auch für bestehende Lesevorrichtungen erzielt werden. Insbesondere ist eine relativ problemlose Nach- bzw. Aufrüstung bestehender Lesevorrichtungen möglich. Zudem ist die interne, autorisierte Störfeldkompensation besonders funktionszuverlässig und auch für komplexe bzw. datenintensive Signale anwendbar, ohne dass erhöhte Verzögerungs- bzw. Verarbeitungszeiten auftreten.

Durch die Ausgestaltung nach Anspruch 15 wird sichergestellt, dass es ohne Kenntnis des Verlaufs des Störsteuersignals nicht mehr möglich ist, das eigentliche Nutzsignal zu extrahieren. Das zufallsartige Störsteuersignal erschwert somit die Erfassung verwertbarer Nutzinformationen und vereitelt darauf abzielende manipulatorische Eingriffe. Dies kann durch eine Mehrfachanordnung, insbesondere durch eine Doppelanordnung von Störfeldspulen mit jeweils linear unabhängigen Störsteuersignalen zusätzlich erschwert werden.

Bei der Ausgestaltung nach Anspruch 16 ist von Vorteil, dass durch die Einschränkung bzw. Konzentration der Bandbreite des Störsteuersignals auf den für das Nutzsignal typischen Bereich die Gesamtleistung des Störsteuersignals im Verhältnis zu seiner Leistung bzw. Wirkung im Frequenzbereich des Nutzsignals abnehmen kann. Umgekehrt heißt dies, dass mit gleich bleibender bzw. bestimmter Ausgangsleistung des Störfeldes eine höhere Wirkung im Spektralbereich des Nutzsignals erzielt werden kann. Die Dimensionierung von Verstärkerstufen sowie die Dimensionierung der Störfeldspule kann somit auch für eine geringere Leistung erfolgen, sodass dadurch in der Regel auch eine kompaktere Bauweise und ein energiesparsamerer Betrieb ermöglicht werden.

Bei der Ausgestaltung nach Anspruch 17 ist von Vorteil, dass wesentliche Teile der Signalverarbeitung in digitaler Form erfolgen. Insbesondere kann mittels dem Signalprozessor das berechnete bzw. modellhaft nachgebildete Störsignal vom Ausgangs- bzw. Summensignal des Magnetfeldlesekopfes einfach subtrahiert und das verbleibende Nutzsignal entweder über einen DA-Wandler in ein analoges Signal rückgewandelt und für die weitere Verarbeitung bereitgestellt werden, oder die Auswertung des Nutzsignals erfolgt softwaremäßig bereits im Signalprozessor. Somit wird eine preisgünstige Gesamtlösung gewährleistet bzw. der erfindungsgemäße Störfeldgenerator in die Steuer- und Auswerteelektronik des Kartenlesers integriert.

Durch die Ausführung gemäß Anspruch 18 kann der Störfeldeinfluss hinreichend genau vorausberechnet werden. Die Implementierung kann in einfacher Art und Weise softwaretechnisch erfolgen und mittels eines Signalprozessors umgesetzt werden. Ein solches digitales Filter wird dabei durch einen Satz von Filterkoeffizienten charakterisiert, mit welchen der genaue Frequenz- und Phasengang des Filters festgelegt werden kann. Vorteilhaft ist weiters, dass ein derartiges signaltechnisches Modell durch einfache Umprogrammierung bzw. Neukalibrierung an sich verändernde Verhältnisse bzw. an legitim veränderte Bedingungen bzw. Zustände einfach und rasch und erforderlichenfalls sogar im laufenden Betrieb angepasst werden kann.

Bei der Ausgestaltung nach Anspruch 19 ist von Vorteil, dass die bevorzugt in einem Kalibrierverfahren ermittelten Filterkoeffizienten nichtflüchtig in einem Speicher abgelegt werden können, so dass sich bei einer Wiederinbetriebnahme des Störfeldgenerators bzw. der Lesevorrichtung ein neuerlicher Kalibriervorgang erübrigt.

Bei der Ausgestaltung nach Anspruch 20 ist von Vorteil, dass ein Satz von Referenzkoeffizienten zur Verfügung steht, der das Übertragungsverhalten des ordnungsgemäßen, nicht manipulierten Zustandes der Lesevorrichtung beschreibt. Die Filterkoeffizienten des Modellfilters können dabei in einem Kalibriervorgang zumindest einmalig derart angepasst werden, dass das Übertragungsverhalten des signaltechnischen Modells dem des realen Signalpfades über die Störfeldspule entspricht.

Bei den Maßnahmen gemäß Anspruch 21 ist von Vorteil, dass die gespeicherten Modellparameter als Vergleichswerte für die Beurteilung des Vorliegens von Manipulationen oder Defekten der Lesevorrichtung dienen. In diesem Fall wird also nicht das verbleibende, nicht mehr vollständig kompensierbare Störsignal als Kennzeichen für eine Manipulation oder einen Defekt herangezogen, sondern wird die Abweichung der laufend oder periodisch kalibrierten Modellparameter zu den ursprünglich ermittelten und gespeicherten Parametern als Anzeichen für eine Manipulation oder einen Defekt gewertet. Beispielsweise ist dadurch eine automatische Erkennung von betrügerischen Manipulationen in der Nähe der Leseposition für einen kartenförmigen Datenträger, insbesondere im Bereich des Zuführschlitzes für einen kartenförmigen Datenträger, ermöglicht. So werden zum Beispiel kriminelle Umgehungsversuche in Form elektromagnetischer Abschirmungen oder Verschiebungen der Störfeldspule, welche Maßnahmen den Einfluss der Störfeldspule auf den illegal angebrachten Lesekopf abschwächen oder eliminieren sollen, automatisiert erkannt. Auch ein Defekt oder ein gezieltes Außerfunktionsetzen der Störfeldspule wird dadurch automatisiert erkannt.

Durch die Weiterbildung gemäß Anspruch 22 wird gewissermaßen ein mehrkanaliges Störfeld geschaffen, wodurch die Möglichkeiten, aus dem Signal eines manipulatorisch angebrachten Lesekopfes das Nutzsignal entsprechend den Kartendaten zu rekonstruieren, nochmals deutlich verringert werden. Insbesondere wird dadurch die Manipulationssicherheit einer derartigen Lesevorrichtung abermals verbessert.

Durch die Ausgestaltung nach Anspruch 23 können bei ausreichend geringen Fertigungstoleranzen sehr konstante Übertragungsverhalten und gut reproduzierbare Störfeldeinflüsse sichergestellt werden. Folglich kann das signaltechnische Modell, welches zur Kompensation des Störfeldeinflusses vorgesehen ist, für alle bzw. viele Exemplare von Lesevorrichtungen einheitlich ausgestaltet sein. Eine initiale Adaption oder eine exemplarabhängige Einstellung von Modellparametern kann dadurch in vielen Fällen erübrigt werden.

Die Ausgestaltung nach Anspruch 24 ergibt eine Lesevorrichtung, welche eine besondere Manipulationssicherheit bietet und betrügerische Manipulationen in hohem Ausmaß vereitelt.

Durch die vorteilhafte Weiterbildung gemäß Anspruch 25 wird automatisch verhindert, dass ein kartenförmiger Datenträger vom rechtmäßigen Besitzer bzw. Benutzer zugeführt wird, wenn untypische bzw. auf Manipulationen hinweisende Situationen vorliegen. Insbesondere kann dadurch vermieden werden, dass zwischen einem kartenförmigen Datenträger und einem manipulatorisch angebrachten Lesekopf eine Relativbewegung ausgeführt wird.

Schließlich ist eine Ausgestaltung nach Anspruch 26 von Vorteil, da dadurch Bankdienstleistungsautomaten, wie zum Beispiel Bankomaten oder Überweisungsautomaten, bzw. Zutrittskontrollsysteme geschaffen werden, welche ein erhöhtes Maß an Manipulations- und Betrugssicherheit bieten.

Von Vorteil sind auch die weiterbildenden Maßnahmen nach Anspruch 27, da dadurch die zu schützenden Daten des Magnetstreifens zu keinem Zeitpunkt derart in der Lesevorrichtung oder auf der Übertragungsstrecke zur übergeordneten elektronischen Einheit vorliegen, dass sie durch betrügerisch angebrachte elektronische Schaltungen oder durch Modifikationen der originären Hard- oder Software abgegriffen oder ausgelesen werden könnten.

Darüber hinaus sind auch die Maßnahmen gemäß Anspruch 28 von Vorteil, da dadurch mit relativ geringem Aufwand an Hardware ein umfassender Betrugs- bzw. Manipulationsschutz erzielt wird. Insbesondere erfolgt dabei die Verschlüsselung der Daten des Magnetstreifens in der gleichen Einheit wie die Kompensation des Störfeldes. Dies ist ein relativ kleiner, von vornherein relativ gut geschützter Bereich, auf den nur mit besonders hohem Aufwand bzw. nur mit speziellem Fachwissen zugegriffen werden kann.

Die Erfindung wird im Nachfolgenden anhand der in den Zeichnungen dargestellten Ausführungsbeispiele näher erläutert. Es zeigen jeweils in stark vereinfachter, schematischer Darstellung:
- Fig. 1: eine beispielhafte Lesevorrichtung vom Typ Einzugsleser für kartenförmige Datenträger, wie sie dem Stand der Technik entspricht;
- Fig. 2: den Kartenleser gemäß Fig. 1 während eines in betrügerischer Absicht manipulierten Zustandes, welche Manipulation von einem gutgläubigen Benutzer der Lesevorrichtung zumeist unbemerkt bleibt;
- Fig. 3: eine in erfindungsgemäßer Art und Weise betrugsgeschützte Lesevorrichtung, bei welcher ein in betrügerischer Absicht angebrachter, zusätzlicher Lesekopf entsprechend Fig. 2 vorliegt;
- Fig. 4: eine Weiterbildung der Ausgestaltung gemäß Fig. 3 umfassend mehr als eine Störfeldspule;
- Fig. 5: ein Blockschaltbild der Signalverarbeitungseinheit, wie sie zur Umsetzung der Erfindung eingesetzt werden kann;
- Fig. 6: eine erweiterte Signalverarbeitungseinheit umfassend ein adaptives, signaltechnisches Modell;
- Fig. 7: eine Weiterbildung der Signalverarbeitungseinheit umfassend eine Mehrfachausbildung von adaptiven, signaltechnischen Modellen und zusätzliche, integrale Auswertungseinheiten sowie Steuer- und Kommunikationsschnittstellen;
- Fig. 8: eine technische Weiterbildung der vor Betrug geschützten Lesevorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

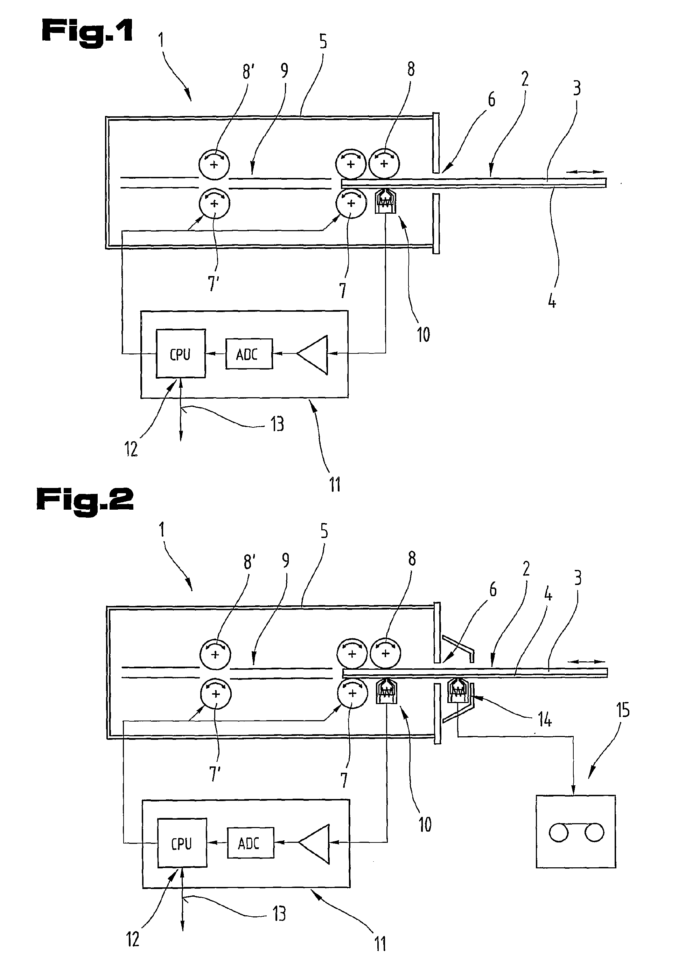

Fig. 1 zeigt eine herkömmliche Lesevorrichtung 1 für kartenförmige Datenträger 2, auf welchen Informationen bzw. Daten zumindest magnetisch hinterlegt sind. Insbesondere ist diese Lesevorrichtung 1 zur Verarbeitung von Magnetkarten 3 mit wenigstens einem Magnetstreifen 4 und/oder von Chipkarten mit wenigstens einem Magnetstreifen 4 ausgebildet. Auf diesen Magnetstreifen 4 sind wie an sich bekannt nutzungs- bzw. sicherheitsrelevante Daten hinterlegt, welche von der Lesevorrichtung 1 automatisiert gelesen werden können und/oder verändert bzw. aktualisiert werden können. Bei solchen kartenförmigen magnetischen Datenträgern 2 handelt es sich insbesondere um Bank- oder Geldkarten sowie um Berechtigungskarten zur Authentifizierung einer Zutritts- oder Nutzungsberechtigung für bestimmte Einrichtungen. D.h., dass die angegebene Lesevorrichtung 1 häufig bei Bank- oder sonstigen Dienstleistungsautomaten oder Zutrittskontrollsystemen zum Einsatz kommt.

Solche Lesevorrichtungen 1 weisen üblicherweise folgende Komponenten auf: Ein Gehäuse 5, wenigstens eine Zuführöffnung 6 bzw. ein Kartenlesermaul zum Zuführen und nachfolgenden Entnehmen eines magnetischen Datenträgers 2, zumeist wenigstens eine motorisch angetriebene Transportrolle 7, 7' zum automatischen Einziehen und Ausschieben eines zugeführten Datenträgers 2, gegebenenfalls Gegendruckrollen 8, 8' und/oder Führungselemente 9, wenigstens einen Magnetfeldlesekopf 10 zur sensorischen Erfassung von auf dem Datenträger 2 hinterlegten, magnetisch codierten Informationen und eine Auswerte- und Steuerschaltung 11 zum Steuern der für den Lesevorgang relevanten Funktionen der Lesevorrichtung 1 sowie zur Decodierung des vom Magnetfeldlesekopf 10 und/oder von einem Array aus Federelementen zur Chipkontaktierung und/oder von einer kontaktlosen Leseeinheit bzw. einem RFID-Modul gelieferten Signals. Die Auswerte- und Steuerschaltung 11 dient zumeist auch zur Umsetzung der erfassten Signale in entsprechende digitale Informationen und zur Bereitstellung dieser Informationen via eine geeignete Signal- bzw. Datenschnittstelle 12. Bei der Datenschnittstelle kann es sich um eine Schnittstelle für den bidirektionalen Austausch von Daten handeln, wie beispielsweise eine serielle Schnittstelle (RS 232, RS 485), eine Ethernet- oder eine USB-Schnittstelle. Die Signal- bzw. Datenschnittstelle 12 kann aber auch bloß aus einer oder mehreren Status- bzw. Signalleitungen 13 bestehen, über welche bestimmte Zustände signalisiert werden. Beispielsweise kann eine solche Status- bzw. Signalleitung 13 zum Entriegeln einer Zugangstür vorgesehen sein, wenn ein zugeführter Datenträger 2 als gültig und berechtigt erkannt wird.

In der Abbildung nach Fig. 1 ist ein Magnetkartenleser skizziert, in welchen eine entsprechende Magnetkarte 3 mit einem Magnetstreifen 4 teilweise eingeführt ist. Die Auswerte- und Steuerschaltung 11 ist hier zur besseren Übersicht außerhalb des Gehäuses 5 der Lesevorrichtung 1 dargestellt. Die Auswerte- und Steuerschaltung 11 ist jedoch in der Regel gemeinsam mit den mechanischen und elektrischen Komponenten in das Gehäuse 5 der Lesevorrichtung 1 integriert.

Weitere allgemein übliche, jedoch zur Darstellung des Erfindungsgedankens nicht unbedingt benötigte, mechanische, elektrische und elektromechanische Komponenten eines Kartenlesers, wie beispielsweise eine elektromechanisch verriegelbare Klappe oder ein Shutter am Kartenlesermaul, gefederte Anpress- und Führungselemente, eine Spannungsversorgung, Sensoren zur Erkennung und Positionsbestimmung eines zugeführten Datenträgers 2, Speicherelemente zum Ablegen und Abrufen von Daten und Programmen durch eine Prozessoreinheit (CPU, DSP), sowie verschiedene signaltechnische Verknüpfungen sind aus Gründen der besseren Übersicht in den Figuren nicht dargestellt. Außerdem sind diese Elemente aus dem Stand der Technik wohl bekannt und können vom Fachmann ohne weiteres implizit mitgelesen bzw. implementiert werden.

Fig. 2 zeigt eine Lesevorrichtung 1, insbesondere einen herkömmlichen Magnetkartenleser wie in Fig. 1, bei welchem jedoch nachträglich von einem Kriminellen vor dem eigentlichen Kartenlesermaul bzw. vor der Zuführöffnung 6 für einen kartenförmigen Datenträger 2 ein weiterer Magnetfeldlesekopf 14 in betrügerischer Absicht derart angebracht wurde, dass beim Zuführen einer Magnetkarte 3 die darauf enthaltenen Informationen bzw. Daten mitgelesen werden und für die spätere missbräuchliche Reproduktion einer datengleichen Magnetkarte verwendet werden können. Durch eine in der Regel sehr kompakte und getarnte Bauweise ist der zusätzliche, magnetische Lesekopf normalerweise nicht als solcher erkennbar und die nicht autorisierte Erfassung der Karteninformationen kann erfolgen, ohne dass dies vom berechtigten Karteninhaber bemerkt wird.

Das Signal des zusätzlich angebrachten, betrügerischen Magnetfeldlesekopfes 14 kann sodann - wie an sich bekannt - vom Kriminellen in hinterlistiger Weise auf einem verborgen platzierten Aufzeichnungsgerät 15 aufgezeichnet und zu einem späteren Zeitpunkt analysiert werden. In weiterer Folge können die derart gewonnenen Daten zur Herstellung einer nicht autorisierten Kartenkopie missbraucht werden.

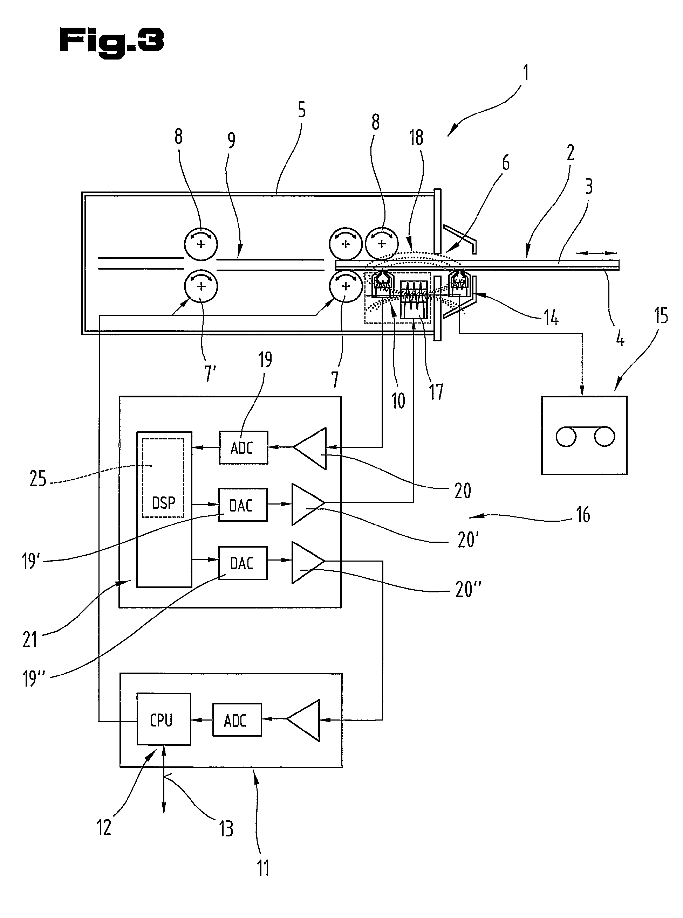

Fig. 3 zeigt eine erfindungsgemäße Lesevorrichtung 1, insbesondere einen Magnetkartenleser mit einer erfindungsgemäßen Betrugsabwehrvorrichtung bzw. einem erfindungsgemäßen Störfeldgenerator 16. Dabei ist an der Innenseite des Kartenlesermauls bzw. der Zuführöff-nung 6 wenigstens eine magnetisch wirksame Störfeldspule 17 angebracht, welche mit einem vorzugsweise stochastischen Störsteuersignal beaufschlagt wird. Das bevorzugt stochastische elektrische Störsteuersignal an der Störfeldspule 17 erzeugt ein magnetisches Störfeld 18, welches auch auf einen in betrügerischer Absicht vor dem Kartenlesermaul gegebenenfalls angeordneten Magnetfeldlesekopf 14 einwirkt und in diesem ein Störsignal induziert, welches dem Signal, das durch eine vorbeibewegte Magnetkarte 3 entsteht, additiv überlagert wird. Durch diese Überlagerung des Karten-Nutzsignals mit dem stochastischen Störsteuersignal des Störfeldgenerators 16 bzw. mit dem Störfeld 18 der damit gespeisten Störfeldspule 17 wird eine Erfassung der eigentlichen Kartendaten vereitelt und eine unberechtigte Vervielfältigung der Kartendaten verhindert. Darüber hinaus wirkt das Störfeld 18 in ähnlicher Weise auf den eigentlichen, betriebsrelevanten Magnetfeldlesekopf 10 der Lesevorrichtung 1 ein. Insbesondere kann das Störfeld 18 der Störfeldspule 17 ausreichend intensiv sein bzw. können die Störfeldspule 17 und der legale bzw. ordnungsgemäße Magnetfeldlesekopf 10 derart nahe zueinander positioniert sein, dass das Störfeld 18 auch auf den Magnetfeldlesekopf 10 maßgeblich einwirkt und dessen Signalverhalten bzw. Leseergebnis beeinflusst.

Die Störfeldspule 17 ist in Fig. 3 als innerhalb des Kartenlesermauls bzw. als innerhalb des Gehäuses 5 angeordnet dargestellt. Die Störfeldspule 17 kann jedoch grundsätzlich dem Kartenlesermaul auch vorgelagert sein, also außerhalb des eigentlichen Kartenlesers angebracht werden. Die Störfeldspule 17 kann dabei auch in Art eines nachrüstbaren Zusatzmoduls ausgeführt sein.

Eine mit strichlierten Linien angedeutete, gleichsam praktikable und vorteilhafte Weiterbildung ist durch eine bauliche Kombination des Magnetfeldlesekopfes 10 mit der Störfeldspule 17 erzielbar. D.h., dass auch ein Magnetfeldlesekopf 10 mit integrierter Störfeldspule 17 vorgesehen sein kann. Eine solche Kombination bzw. Integration stellt bei entsprechend geringen Fertigungstoleranzen ein sehr konstantes und fertigungstechnisch gut reproduzierbares Übertragungsverhalten bezüglich des Störfeldeinflusses sicher, sodass das im Nachfolgenden noch näher beschriebene signaltechnische Modell 25 zur Kompensation des Störfeldeinflusses für alle Exemplare einheitlich ausgestaltet sein kann. Insbesondere können dadurch vernachlässigbare Abweichungen bzw. Streuungen zwischen den einzelnen Exemplaren bzw. Baugruppen aus Magnetfeldlesekopf 10 und Störfeldspule 17 erzielt werden. Folglich kann auf eine Adaption oder auf eine exemplarabhängige Einstellung von Modellparametern verzichtet oder zumindest auf einen sehr einfachen Abgleich reduziert werden. Eine solche Anordnung eignet sich alternativ insbesondere auch zur Verwendung mit einer einfachen analogen Schaltung zur Kompensation des Störfeldeinflusses auf das Summen- bzw. Ausgangssignal des Magnetfeldlesekopfes 10.

Wesentlich ist, dass eine Positionierung der Störfeldspule 17 und/oder eine Dimensionierung der Abstrahlungsleistung, insbesondere der Feldstärke, oder der Abstrahlungscharakteristik, insbesondere der Feldcharakteristik der Störfeldspule 17 und/oder eine Dimensionierung der Erfassungsempfindlichkeit des autorisierten respektive ordnungsgemäßen Magnetfeldlesekopfes 10 derart gewählt ist, dass das Störfeld 18 der Störfeldspule 17 zumindest während dem Lesen der magnetisch codierten Daten des Datenträgers 2 auf einen in betrügerischer Absicht angebrachten Magnetfeldlesekopf 14 Einfluss nimmt, als auch auf den berechtigten respektive autorisierten Magnetfeldlesekopf 10 einwirkt und dessen Ausgangs- bzw. Summensignal beeinflusst.

Der Störfeldgenerator 16 ist hier als eigenständige Baugruppe dargestellt, welche in vorteilhafter Art und Weise als optionales bzw. nachrüstbares Ergänzungs- bzw. Erweiterungsmodul zu einer üblichen, bereits bestehenden Auswerte- und Steuerschaltung 11 für eine Lesevorrichtung 1 ausgeführt sein kann. Vor allem bei Neuaufbauten von Lesevorrichtungen 1 kann der Störfeldgenerator 16 natürlich auch einen integralen Bestandteil der Steuerelektronik, insbesondere der Auswerte- und Steuerschaltung 11 darstellen.

Die Signalverarbeitung des Störfeldgenerators 16 ist als digitales Abtastsystem mit AD-/DA-Wandlern 19-19" an den Übergängen zu den Analogsignalen implementiert. Zur Anpassung der jeweiligen Pegel der Analogsignale an die Ein- und Ausgänge der AD-/DA-Wandler 19-19" sind Verstärker- bzw. Anpassungsstufen 20-20" vorgesehen, die üblicherweise auch einfache Tiefpassfilter (Anti-Alias Filter) und dergleichen umfassen. Weiters umfasst der Schaltungsaufbau des Störfeldgenerators 16 eine digitale Recheneinheit, bevorzugt eine digitale Signalprozessoreinheit 21 (DSP), welche mit dem Magnetfeldlesekopf 10 der Lesevorrichtung 1, mit der Störfeldspule 17 der Lesevorrichtung 1 und mit der Auswerte- und Steuerschaltung 11 der Lesevorrichtung 1 leitungsverbunden ist. Alternativ kann diese Auswertelektronik zumindest teilweise durch die Signalprozessoreinheit 21 umgesetzt sein, wie dies im Nachfolgenden näher beschrieben ist.

Der Störfeldgenerator 16 speist die Störfeldspule 17 mit einem stochastischen Störsteuersignal, wodurch das stochastische Störfeld 18 generiert wird. Das elektrische Ausgangs- bzw. Summensignal des vom magnetischen Störfeld 18 ebenso beeinflussten Magnetfeldlesekopfes 10 der Lesevorrichtung 1 wird dabei nicht mehr direkt zur Auswerteelektronik, d.h. nicht mehr direkt zur Auswerte- und Steuerschaltung 11 der Lesevorrichtung 1 geführt, sondern zunächst zur digitalen Signalprozessoreinheit 21 (DSP) des Störfeldgenerators 16, welche alle mit dem Störsteuersignal korrelierten Signalanteile herausrechnet bzw. wegfiltert. Das von der digitalen Signalprozessoreinheit 21 korrigierte bzw. entstörte Signal, d.h. das Nutzsignal, wird anschließend an die Auswerte- und Steuerschaltung 11 weitergeleitet und in herkömmlicher Weise ausgewertet. Alternativ wäre es auch möglich, auch die Auswertung des entstörten Signals, d.h. des Nutzsignals, durch die digitale Signalprozessoreinheit 21 (DSP) zu bewerkstelligen und letztere ebenso zur Steuerung der Abläufe der Lesevorrichtung 1 bzw. der Peripherieeinheiten zu nutzen, wie dies im Nachfolgenden nochmals erläutert wird.

Die Anbindung der Lesevorrichtung 1 an eine übergeordnete Gerätesteuerung, z.B. an die Steuerung eines Geldautomaten, ist in den Figuren nur vereinfacht dargestellt und zwar als allgemeine Signal- bzw. Datenschnittstelle 12 zur Kommunikation bzw. zur Weiterleitung der Informationen aus der Magnetkarte 3. Die eigentliche Datensenke ist aufgrund der besseren Übersichtlichkeit nicht dargestellt.

Der Störfeldgenerator 16 kann weiters diverse Steuereingänge und Steuerausgänge aufweisen. Beispielsweise kann der Störfeldgenerator 16 Ein- bzw. Ausgangsschnittstellen zum gesteuerten Aktivieren und Deaktivieren des Störfeldes 18, zum Auslösen einer Initialkalibrierung samt anschließender Speicherung der Koeffizienten des Signalübertragungsmodells bzw. Signalverhaltens, zum Auslösen eines Resets der Hardware und/oder zum Signalisieren einer unzulässig großen Abweichung zwischen dem gespeicherten Signalmodell (Soll-Zustand) und den tatsächlich auftretenden Übertragungsverhältnissen (Ist-Zustand) umfassen. Die zuletzt genannte Schnittstelle des Störfeldgenerators 16 könnte somit einen Hinweis auf eine unberechtigte Manipulation an der Lesevorrichtung 1 abgeben.

Die Funktionalität der beschriebenen Ein- und Ausgänge kann natürlich ebenso durch eine komplexere Kommunikationsschnittstelle bereitgestellt werden, welche für die Kommunikation mit einem übergeordneten Steuerrechner vorgesehen ist. Eine solche komplexere Schnittstelle kann beispielsweise als serielle RS232- oder RS485-Schnittstelle, als Ethernet-Schnittstelle oder als USB-Schnittstelle ausgeführt sein.

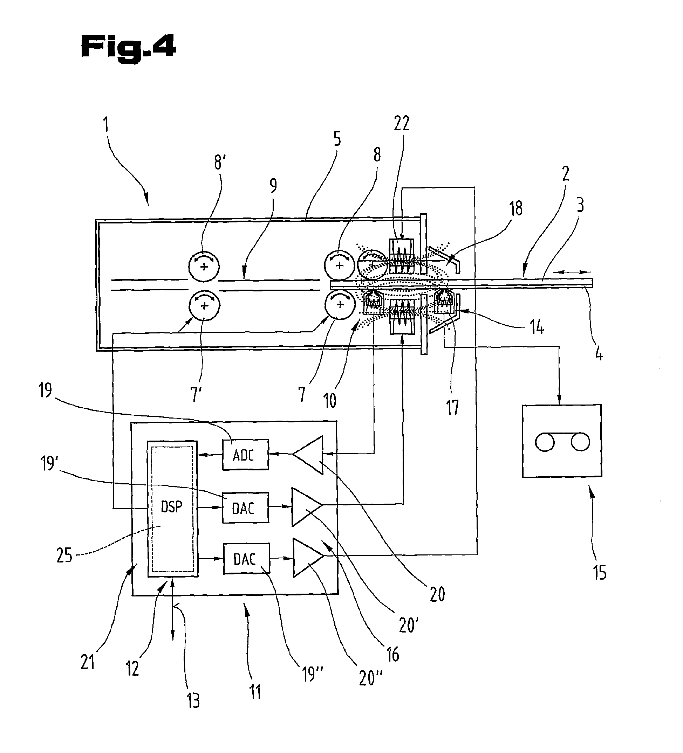

Fig. 4 zeigt eine vorteilhafte Weiterbildung des erfindungsgemäßen Störfeldgenerators 16, bei welchem zusätzlich zur ersten Störfeldspule 17 zumindest eine zweite Störfeldspule 22 ausgebildet ist, welche mit einem zum ersten Störsteuersignal nicht korrelierten zweiten Störsteuersignal beaufschlagt wird. Dadurch wird die Manipulationssicherheit der Lesevorrichtung 1 nochmals erhöht.

Außerdem ist hier der Störfeldgenerator 16 als integrale Komponente der zentralen Auswerte- und Steuerschaltung 11 der Lesevorrichtung 1 ausgebildet. Dabei wird das Ausgangs- bzw. Summensignal des ordnungsgemäßen bzw. autorisierten Magnetfeldlesekopfes 10 in der digitalen Signalprozessoreinheit 21 (DSP) entstört, d.h. die mit den beiden Störsignalen korrelierten Anteile werden herausgerechnet. Das entsprechend entstörte Signal, d.h. das rekonstruierte Nutzsignal des Magnetfeldlesekopfes 10, wird anschließend direkt von der digitalen Signalprozessoreinheit 21 (DSP) in adäquater Weise decodiert und die extrahierten Daten werden einer übergeordneten Gerätesteuerung weitergeleitet, insbesondere via die Signal- bzw. Datenschnittstelle 12 bereitgestellt. Die digitale Signalprozessoreinheit 21 (DSP) übernimmt in diesem Fall auch die Steuerung des Antriebes bzw. der Transportrollen 7, 7' der Lesevorrichtung 1 sowie die Ansteuerung von gegebenenfalls vorhandenen, aus Gründen der Übersichtlichkeit hier nicht dargestellten Komponenten, wie beispielsweise einer steuerbaren Verschlussblende für das Kartenlesermaul, oder die Auswertung verschiedener Sensoren zur Erfassung der Position einer eingeführten Magnetkarte 3.

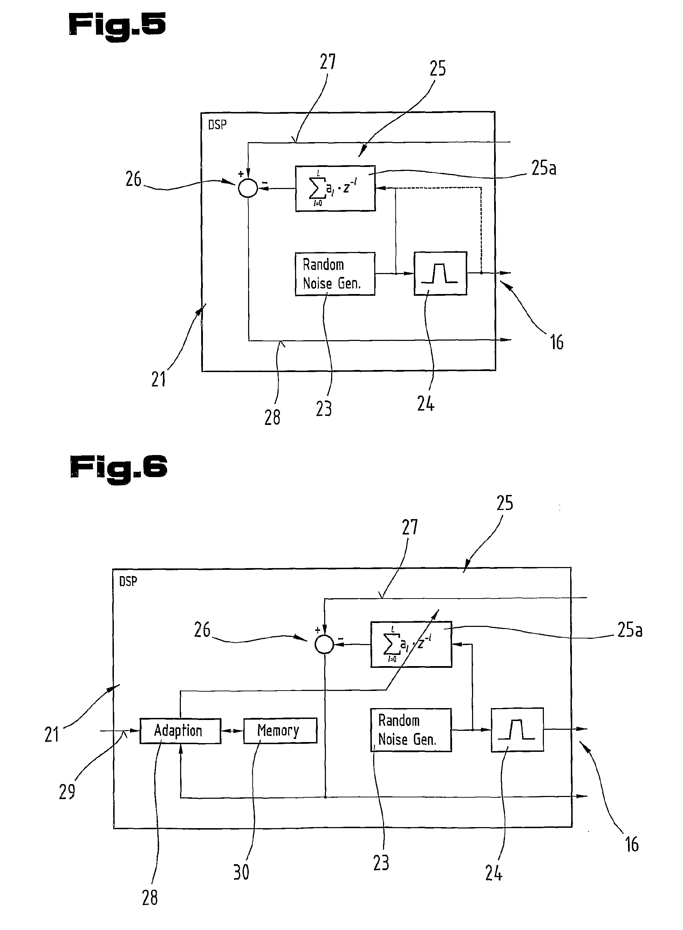

Fig. 5 zeigt in Form eines Blockschaltbildes die in der digitalen Signalprozessoreinheit 21 implementierte, digitale Signalverarbeitung für eine relativ einfache Form des Störfeldgenerators 16, beispielsweise zur Umsetzung der Erfindung in einer Lesevorrichtung 1 nach Fig. 3.

Ausgangspunkt für die Erzeugung des stochastischen Störsteuersignals ist ein digitaler Pseudo-Zufallszahlengenerator 23. Dieser Generator erzeugt zumindest pseudoartig Zufallszahlen. Die vom Pseudo-Zufallszahlengenerator 23 erzeugte Folge von Zufallszahlen entspricht zumindest annähernd einem weißen Rauschen mit einer weitgehend gleichmäßigen spektralen Leistungsdichte im gesamten diskreten Frequenzbereich des digitalen Abtastsystems.

Bevorzugt wird die weiße Rauschfolge des Pseudo-Zufallszahlengenerators 23 mittels eines digitalen Bandpassfilters 24 auf ein Frequenzband begrenzt, welches üblicherweise zumindest einen Teil jener Frequenzen umfasst, welche im Nutzsignal des Magnetfeldlesekopfes 10 beim Lesen der Magnetkarte 3 - Fig. 3 - auftreten. Die Leistung bzw. Bandbreite des Störsteuersignals wird dadurch auf jene Frequenzen konzentriert, die für das Verfälschen des Signals im fremden bzw. betrügerischen Magnetfeldlesekopf 14 - Fig. 3 - wesentlich sind und welche auch nicht mit einfachen Bandpass-Filtern eliminierbar sind, ohne dabei die Anteile des Nutzsignals ebenso zu entfernen. Die bandbreitenbegrenzte Ausgangsfolge wird einem nicht dargestellten DA-Wandler zugeführt und von diesem in ein analoges Störsteuersignal zur Ansteuerung der Störfeldspule 17 - Fig. 3 - umgewandelt.

Zudem wird die selbe Zufallszahlenfolge des Pseudo-Zufallszahlengenerators 23, oder - wie in strichlierten Linien angedeutet - das Ausgangssignal des Bandpassfilters 24, einem signaltechnischen Modell 25, insbesondere einem digitalen Modellfilter 25a zugeführt. Das digitale Modellfilter 25a ist hier formal als FIR-Filter in Normalform dargestellt. Aufbau, Implementierung und Eigenschaften solcher FIR-Filter sind der einschlägigen Fachliteratur zu entnehmen. Die Koeffizienten des Modellfilters 25a sind so gewählt, dass damit das gesamte Signalübertragungsverhalten der realen Strecke ausgehend vom Pseudo-Zufallszahlengenerator 23 über den Bandpassfilter 24, die Störfeldspule 17 und den Magnetfeldlesekopf 10 signaltechnisch nachgebildet ist. Bevorzugt beschreiben die Koeffizienten des Modellfilters 25a das Signalübertragungsverhalten der gesamten Übertragungsstrecke zwischen dem Pseudo-Zufallszahlengenerator 23 und einem dargestellten, fiktiven Summationspunkt 26, welcher zwischen dem Signal der Magnetfeldspule 10 - Fig. 3 - und dem Ausgangssignal des digitalen Modellfilters 25a ausgeführt ist. Die Koeffizienten des Modellfilters 25a kennzeichnen somit bevorzugt das gesamte Signalübertragungsverhalten innerhalb der Strecke zwischen dem Pseudo-Zufallszahlengenerator 23, dem Bandpassfilter 24 und den in Fig. 3 beispielhaft veranschaulichten Elementen DA-Wandler 19', Verstärker- bzw. Anpassungsstufe 20', Störfeldspule 17, Magnetfeldlesekopf 10, Verstärker- bzw. Anpassungsstufe 20 und dem AD-Wandler 19 zurück zum Summationspunkt 26. Wie vorhergehend bereits erwähnt, können innerhalb dieser Signalübertragungsstrecke zwischen dem Pseudo-Zufallszahlengenerator 23 und einem Rückführungspfad 27, welcher ausgehend vom Magnetfeldlesekopf 10 - Fig. 3 - zum Summationspunkt 26 verläuft, auch andere, das Signalübertragungsverhalten bestimmende bzw. beeinflussende Komponenten angeordnet sein. Auch die sonstigen Einflussfaktoren innerhalb dieser Signalübertragungsstrecke werden durch die Filterkoeffizienten bzw. den Modellfilter 25a bestmöglich abgebildet. Wesentlich ist, dass durch die Filterkoeffizienten ein signaltechnisches Modell 25 gebildet ist, welches das tatsächliche Signalübertragungsverhalten über die vorhergehend beschriebene Signalübertragungsstrecke ausreichend genau nachbildet. In dieser einfachen Grundform des Störfeldgenerators 16 ist eine einmalige und fixe, insbesondere eine werksseitige Festlegung der Filterkoeffizienten vorgesehen. Die Bestimmung der Filterkoeffizienten kann insbesondere bereits werksseitig nach dem Zusammenbau der kompletten Lesevorrichtung 1 erfolgen und beispielsweise durch einen Kalibriervorgang eingeleitet werden.

Am Summationspunkt 26 wird die berechnete Folge des Störfeldeinflusses vom realen Ausgangs- bzw. Summensignal des Magnetfeldlesekopfes 10 bzw. von dessen digitalisierter Folge von Abtastwerten subtrahiert. Das reale Signal des Magnetfeldlesekopfes 10 - Fig. 3 - wird dabei über den symbolischen Rückführungspfad 27 zum modellartigen Summationspunkt 26 geleitet. Am Summationspunkt 26 wird dann der Störanteil im Ausgangs- bzw. Summensignal vom Magnetfeldlesekopf 10 eliminiert und somit ein ungestörtes bzw. entstörtes Nutzsignal für die weitere Verarbeitung rekonstruiert. Dieses entstörte Nutzsignal wird dabei an einem Summenpfad 28 des Summationspunktes 26 bereitgestellt.

Die vorhergehend beschriebenen Abläufe bzw. Verbindungen sind dabei modellartig zu verstehen. Deren Implementierung erfolgt via die softwaregesteuerte, programmierbare Signalprozessoreinheit 21 (DSP). Insbesondere wird das vorhergehend beschriebene, signaltechnische Modell 25 mittels der Signalprozessoreinheit 21 (DSP) umgesetzt.

Fig. 6 zeigt eine erweiterte Variante der Signalverarbeitung des Störfeldgenerators 16, bei welcher im Gegensatz zur Grundvariante in Fig. 5 eine nachträgliche bzw. fortwährende und/oder eine bedarfsweise aktivierbare Adaption des Modellfilters 25a an das reale Übertragungsverhalten vorgesehen ist. In der Signalprozessorsoftware ist daher ein Programmmodul mit einem entsprechenden Adaptionsalgorithmus 28 implementiert. Ein bekannter Adaptionsalgorithmus 28 ist der so genannte LMS-Algorithmus (Least Mean Square) - siehe dazu beispielsweise die Literatur von Widrow Stearns. Die Adaption kann sowohl im Zeitbereich als auch unter Verwendung der Fast Fourier Transformation (FFT) im Frequenzbereich erfolgen.

Die fortlaufende Adaption der Filterkoeffizienten des Modellfilters 25a mittels dem Adaptionsalgorithmus 28 ermöglicht eine höhere Qualität betreffend die Rekonstruktion der ungestörten Signalfolge, da auch kleine Änderungen im realen Übertragungsverhalten, etwa temperaturbedingte Schwankungen oder alterungsbedingte Änderungen, umfassend ausgeglichen werden können. Ein weiterer Vorteil der fortlaufenden Adaption entsteht durch die Möglichkeit, die Filterparameter für das aktuelle Übertragungsverhalten mit einem zuvor gespeicherten Referenzzustand zu vergleichen und dadurch Abweichungen zufolge manipulativer Handlungen zu erkennen. Derartige, manipulationsbedingte Abweichungen können sodann einer autorisierten Stelle bzw. dem Benutzer der Lesevorrichtung 1 signalisiert werden, indem von der digitalen Signalprozessoreinheit 21 beispielsweise Alarm- und/oder Fehlermeldungen initiiert oder generiert werden. Alternativ oder in Kombination dazu kann die den Störfeldgenerator 16 umfassende Betrugsabwehrvorrichtung eine Außerbetriebsetzung oder Verriegelung der Lesevorrichtung 1 oder eine Außerbetriebsetzung des gesamten, mit der Lesevorrichtung 1 ausgestatteten Automaten veranlassen.

Zur zuverlässigen Erkennung manipulativer Handlungen an der Lesevorrichtung 1 kann es sinnvoll sein, anstatt des Bandpassfilters 24 zur Leistungsoptimierung des Störsteuersignals ein Filter zu verwenden, welches auch außerhalb des eigentlichen Störfrequenzbandes eine bestimmte spektrale Mindestleistungsdichte aufweist (Shaping-Filter), die jedoch unter der des eigentlichen Störsteuersignals liegen kann. Damit verbessert sich die Möglichkeit zur Erkennung von Änderungen im Übertragungsverhalten der realen Strecke und die numerischen Voraussetzungen für eine fortwährende Adaption des Modellfilters 25a.

Durch ein entsprechendes Steuerkommando bzw. eine Steuerleitung 29 kann bei Bedarf, d.h. prozessabhängig und/oder benutzergesteuert, ein Kalibriervorgang initiiert werden, durch welchen die numerischen Filterkoeffizienten des Modellfilters 25a an das Übertragungsverhalten der realen Strecke angepasst werden und am Ende in einem nicht flüchtigen Speicher 30 abgelegt werden. Die gespeicherten Parameter dienen sowohl zum Initialisieren des Modellfilters 25a nach dem Einschalten der Versorgungsspannung als auch als Referenz bezüglich eines ungestörten bzw. unmanipulierten Zustandes der Lesevorrichtung 1. Die Initiierung eines automatischen Kalibrier- bzw. Anpassungsvorganges für das Modellfilter 25a kann aber auch zeitgesteuert erfolgen. Wesentlich ist, dass durch dieses adaptive Modellfilter 25a eine Anpassung des signaltechnischen Modells 25 derart erfolgt, dass langfristige bzw. schleichende oder bloß kleine Veränderungen des Signalübertragungsverhaltens, welche nicht auf Manipulationen oder Defekte zurückzuführen sind, bei der bevorzugt rechnerischen Kompensation des Störfeldeinflusses möglichst optimal berücksichtigt werden.

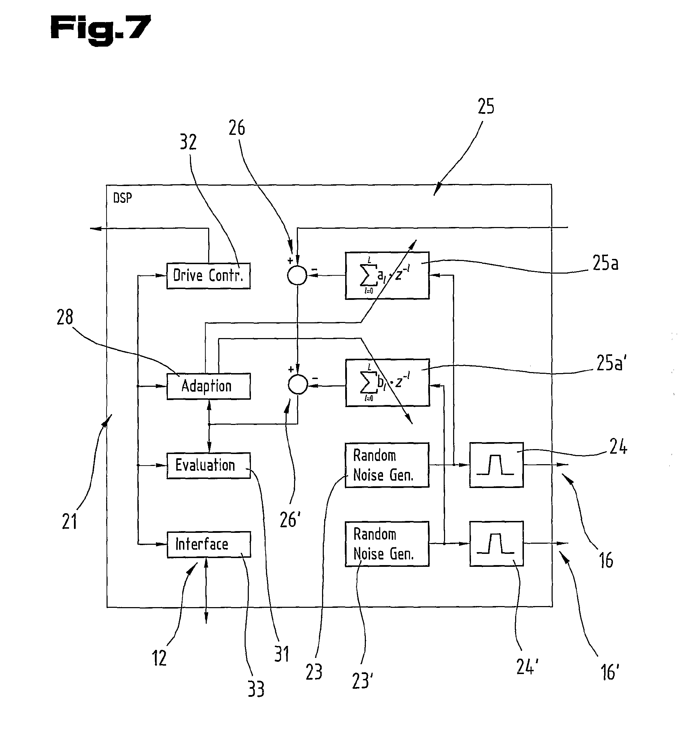

Fig. 7 zeigt eine noch weiter ausgebaute Variante der Signalverarbeitung des Störfeldgenerators 16 bzw. des signaltechnischen Modells 25, insbesondere für eine Lesevorrichtung 1 nach Fig. 4. Im Gegensatz zur Variante nach Fig. 6 werden hier zwei nicht korrelierte Störsignalfolgen zur Ansteuerung zweier Störfeldspulen 17, 22 - Fig. 4 - erzeugt. Es entsteht damit ein quasi zweikanaliges Störfeld. Für jeden der beiden Störkanäle ist ein eigenes Modellfilter 25a, 25a' vorgesehen, welches den Einfluss des jeweiligen Störsignals auf den Magnetfeldlesekopf 10 der Lesevorrichtung 1 modelliert. Die Modellfilter 25a, 25a' können wie in Fig. 6 adaptiv ausgestaltet sein und sich so den langfristig veränderlichen Übertragungsverhältnissen anpassen. Die jeweils duplizierten bzw. mehrfach umgesetzten Funktionselemente bzw. Baugruppen der digitalen Signalprozessoreinheit 21 sind durch entsprechende Bezugszeichen und ein zusätzliches Apostroph erkennbar.

Zusätzlich wird nach Fig. 7 auch die Decodierung des Nutzsignals aus dem ordnungsgemäßen Magnetfeldlesekopf 10 der Lesevorrichtung 1 durch die digitale Signalprozessoreinheit 21 durchgeführt. Hierfür ist in der Signalprozessoreinheit 21 eine auf Software basierende Auswerteeinheit 31 implementiert. Gemäß dem Blockschaltbild in Fig. 7 wird weiters die Ansteuerung des Antriebes für die Karten-Transportvorrichtung innerhalb der Lesevorrichtung 1 - Fig. 4 - durch die Signalprozessoreinheit 21, insbesondere durch eine darin implementierte Antriebssteuerung 32 vorgenommen. Außerdem werden hierbei zumindest die magnetisch abgespeicherten Kartendaten, insbesondere zumindest die relevanten bzw. benötigten Teile dieser Daten, über ein entsprechendes Interface 33 einer übergeordneten Gerätesteuerung bereitgestellt.

Im Nachfolgenden werden in Verbindung mit den Ausführungsformen gemäß den Fig. 3-7 vorteilhafte Verfahrensmaßnahmen bzw. Wirkungsweisen der Erfindung beschrieben. Diese Verfahrens- und Strukturbeschreibungen zur Erfindung sind dabei hinsichtlich der verschiedenen Ausführungsformen auf gleiche Teile mit gleichen Bezugszeichen übertragbar.

Entsprechend den vorhergehend beschriebenen Ausführungsbeispielen wird also ein Störfeldgenerator 16 aufgebaut, welcher mit einem signaltechnischen Modell 25 zusammenwirkt bzw. gekoppelt ist. Mit diesem signaltechnischen Modell 25 wird das Signalübertragungsverhalten ausgehend von der Störfeldspule 17 auf den internen Magnetfeldlesekopf 10 der Lesevorrichtung 1 nachgebildet bzw. beschrieben. Unter Einbeziehung des signaltechnischen Modells 25 wird der Einfluss des Störfeldes 18 auf das Ausgangssignal des Magnetfeldlesekopfes 10 bzw. der Verlauf des Störfeldes 18 berechnet. Insbesondere wird das Ausgangs- bzw. Summensignal des Magnetfeldlesekopfes 10, welches sich aus dem Nutzsignal durch den kartenförmigen Datenträger 2 und aus dem Störsteuersignal bzw. Störfeld 18 zusammensetzt, durch Abzug des berechneten Störfeldeinflusses korrigiert. Damit wird der Einfluss des Störfeldes 18 auf den Magnetfeldlesekopf 10 vollständig oder nahezu vollständig kompensiert. Nach Abzug des berechneten Störfeldeinflusses weist das verbleibende Signal bzw. Nutzsignal nur noch jene Anteile auf, welche zufolge des am Magnetfeldlesekopf 10 vorbei bewegten Magnetstreifens 4 einer Magnetkarte 3 erzeugt werden. D.h., dass das berechnete Signal einem Nutzsignal entspricht, wie dies ohne Einwirkung des zusätzlichen Störfeldes 18 erfasst worden wäre.

Das signaltechnische Modell 25 zur Vorausberechnung des Störfeldeinflusses wird vorzugsweise durch das digitale Modellfilter 25a bzw. 25a' realisiert, welches insbesondere durch ein FIR-Filter gebildet werden kann. Das digitale Modellfilter 25a bzw. 25a' ist zweckmäßigerweise softwaretechnisch ausgeführt und mittels der Signalprozessoreinheit 21 implementiert. Ein solches Modellfilter 25a, 25a' weist einen Satz von Filterkoeffizienten auf, mit welchen der Frequenz- und Phasengang des Filters hinreichend genau festlegbar ist. Der FIR (finite impulse response)-Filter ist also bevorzugt durch einen digital implementierten Filter gebildet. Prinzipiell wäre jedoch ein geeignetes signaltechnisches Modell 25 in analoger Technik ebenso realisierbar und zur Umsetzung der Erfindung verwendbar. D.h., dass wesentliche Teile der beschriebenen Signalverarbeitung auch in analoger Technik ausgeführt sein können.

Die genannten Maßnahmen bieten eine ganze Reihe von wesentlichen Verbesserungen und stellen diese Maßnahmen einen Ausgangspunkt für mehrere vorteilhafte Weiterbildungen dar: Zum einen muss das Störfeld 18 nicht deaktiviert werden, während die Magnetkarte 3 den internen bzw. autorisierten Magnetfeldlesekopf 10 der Lesevorrichtung 1 passiert, nachdem der Einfluss des Störfeldes 18 zu jedem Zeitpunkt signaltechnisch kompensiert wird und das ungestörte Nutzsignal zufolge der Daten des Magnetstreifens 4 rechnerisch wiederhergestellt wird. Ein Einsatz des magnetischen Störfeldes 18 ist damit auch bei Lesevorrichtungen 1 mit kurzer Bauweise - bezugnehmend auf die Zuführrichtung der Magnetkarte 3 - möglich. D.h. der beschriebene Störfeldgenerator 16 kann auch bei Lesevorrichtungen 1 verwendet werden, bei denen die Kartendaten bereits gelesen werden, während ein Teil der Magnetkarte 3 noch aus der Lesevorrichtung 1 ragt und damit einem betrügerisch bzw. spionageartig angebrachten Magnetfeldlesekopf 14 noch zugänglich ist. Der Störfeldgenerator 16 kann also auch bei Lesevorrichtungen 1 mit kurzer Bauweise implementiert werden und ständig aktiviert sein bzw. auch während dem Lesen der magnetisch codierten Daten der Magnetkarte 3 aktiv bleiben. Der betrügerisch angebrachte Magnetfeldlesekopf 14 wird dadurch zu jedem relevanten Zeitpunkt mit dem Störfeld 18 beaufschlagt, ohne dass eine Möglichkeit der signaltechnischen Kompensation des Störanteils im Ausgangssignal des in betrügerischer Absicht angebrachten Magnetfeldlesekopfes 14 besteht.

Mit dem signaltechnischen Modell 25 kann der Störfeldeinfluss für jede beliebige Wirkungscharakteristik des Störfeldes 18 bzw. für jeden beliebigen Verlauf des die Störfeldspule 17 speisenden Störsteuersignals berechnet werden. Im Gegensatz zu der bekannten Ausführung aus dem Stand der Technik, bei welcher ein Störfeldgenerator verwendet wird, der ein periodisches Störsignal erzeugt, kann bei der erfindungsgemäßen Ausführung auch ein stochastisches, d.h. ein zufälliges Störsteuersignal bzw. Störfeld 18 eingesetzt werden. Während der Einfluss eines periodischen Störsignals auf den betrügerisch angebrachten Magnetfeldlesekopf 14 nachträglich vergleichsweise einfach herausgefiltert werden kann und somit die ungestörten Signalinformationen wiederhergestellt werden können, ist es bei Verwendung eines quasi zufälligen Störsteuersignals nicht mehr möglich, alleinig aus dem Signal des zusätzlich bzw. spionageartig angebrachten Magnetfeldlesekopfes 14 die ungestörten Signalanteile bzw. die Nutzsignalanteile zu rekonstruieren.

Ein weiterer entscheidender Vorteil der erfindungsgemäßen Lösung umfassend das signaltechnische Modell 25 liegt darin, dass durch ein manipulatives Anbringen, Entfernen oder Verändern von magnetisch und/oder elektrisch leitfähigen Teilen im Einflussbereich der Störfeldspule 17 die Magnetfeldlinien und somit das Übertragungsverhalten der Störfeldspule 17 auf den Magnetfeldlesekopf 10 der Lesevorrichtung 1 verändert werden. Gleichzeitig steht aber mit dem signaltechnischen Modell 25 eine Vergleichsgröße für den Ursprungs- bzw. Sollzustand zur Verfügung. Dies bedeutet, dass durch manipulatorisch im Bereich des Kartenlesermauls angebrachte, modifizierte oder aus diesem Bereich entfernte elektrisch oder magnetisch leitfähiger Teile das zuvor angepasste bzw. ermittelte signaltechnische Modell 25 nicht mehr mit den tatsächlich auftretenden Übertragungsverhältnissen übereinstimmt. Wird nämlich keine Magnetkarte 3 gelesen bzw. wird keine Magnetkarte 3 zugeführt, muss im unmanipulierten Zustand das Signal des Magnetfeldlesekopfes 10 nach der Kompensation des Störfeldeinflusses praktisch null sein. Wird aber das Kartenlesermaul in der oben beschriebenen Weise manipuliert, kann der veränderte, tatsächliche Störfeldeinfluss mittels dem signaltechnischen Modell 25 nicht mehr vollständig kompensiert werden und es verbleibt zumindest ein gewisser Rest des Störfeldeinflusses auch nach der Kompensation bzw. Wegfilterung bestehen. Dieser Rest kann ab einem bestimmten Ausmaß als Kennzeichen für eine betrügerische Manipulation gewertet werden und die Lesevorrichtung 1 bzw. der damit ausgestattete Automat kann daraufhin außer Betrieb genommen und/oder Alarm ausgelöst werden. Durch den Einsatz des signaltechnischen Modells 25 ist es weiters nicht mehr möglich, die Wirkung der Störfeldspule 17 beispielsweise durch Anbringen magnetischer Schirmungen oder durch Zerstören der Störfeldspule 17, zum Beispiel durch Bohrungen durch die Frontblende der Lesevorrichtung 1, unerkannt aufzuheben, oder den Einfluss der Störfeldspule 17 durch Verschieben der Störfeldspule 17 infolge des Einführens von Werkzeugen in den Schlitz des Lesevorrichtung 1 abzuschwächen bzw. zu eliminieren. Jede dieser Manipulationen verursacht eine Abweichung des realen Übertragungsverhaltens gegenüber dem signaltechnischen Modell 25, sodass systemkritische bzw. betrügerische Manipulationen automatisiert erfassbar werden. Dies gilt ebenso im Falle eines einfachen Defektes, welcher die Wirkung der Störfeldspule 17 aufhebt oder verändert. Sogar ein Defekt bzw. eine altersbedingte Abnützungs- oder Verschleißerscheinung des Magnetfeldlesekopfes 10 der Lesevorrichtung 1 kann also durch die Einbindung des signaltechnischen Modells 25 in die Lesevorrichtung 1 automatisch erkannt und gemeldet werden.

Zur Überwachung der Funktion und des Zustandes des Störfeldes 18 kann alternativ zum Ausgangsignal des Magnetfeldlesekopfes 10 auch das Signal von einer nicht eigens dargestellten Sensorspule verwendet werden, welche nur zum Zweck der Überwachung des Störfeldes 18 vorgesehen ist und ansonsten kein weiteres Nutzsignal erfasst. Das Feststellen des unmanipulierten Urzustandes und einer etwaigen späteren Manipulation erfolgt dann in genau gleicher Weise wie bei dem Ausgangs- bzw. Summensignal des Magnetfeldlesekopfes 10, allerdings ohne Ermittlung und Weiterverarbeitung eines rekonstruierten Nutzsignals.

Die Ausführungen und Darstellungen in diesem Dokument beziehen sich hauptsächlich auf Lesevorrichtungen 1 vom Typ Einzugsleser, d.h. auf Lesevorrichtungen 1 mit motorischem Antrieb für den selbständigen Einzug und Transport einer zugeführten Magnetkarte 3. Die Erfindung eignet sich jedoch gleichermaßen für verschiedene weitere gebräuchliche Bauformen von Magnetkartenlesern, wie beispielsweise für manuelle Durchzugsleser oder einfache Steckleser.

Vorteilhafte Ausprägungen, Weiterbildungen und Varianten der Erfindung werden im Nachfolgenden beschrieben. Vorteilhaft ist unter anderem die Implementierung der genannten Maßnahmen mittels der Signalprozessoreinheit 21. Mit einer solchen Signalprozessoreinheit 21 kann unter anderem ein breitbandiges stochastisches, insbesondere pseudozufälliges Störsteuersignal berechnet werden. Bevorzugt stellt das Störsteuersignal ein farbiges Rauschen bzw. ein durch ein Bandpassfilter 24 gefiltertes und somit spektral begrenztes Rauschen dar, welches entsprechend der schematischen Darstellung in Fig. 5 zunächst mittels dem Pseudo-Zufallszahlengenerator 23 erzeugt und durch ein Bandpassfilter 24 gefiltert wird und entsprechend den Abbildungen in Fig. 3 über den DA-Wandler 19' und die Verstärker- bzw. Anpassungsstufe 20' zur Ansteuerung der Störfeldspule 17 ausgegeben wird. Ferner wird das vom Störsteuersignal gestörte bzw. vom Störfeld 18 beeinflusste Ausgangs- bzw. Summensignal des Magnetfeldlesekopfes 10 über die Verstärker- bzw. Anpassungsstufe 20 dem AD-Wandler 19 und in weiterer Folge dem Rechenkern bzw. dem Signalprozessor der Signalprozessoreinheit 21 zugeführt. In der Signalprozessoreinheit 21 ist das signaltechnische Modell 25 - Fig. 5, 6, 7 - für die vorstehend beschriebene Strecke in Form eines digitalen Modellfilters 25a, beispielsweise in Art eines FIR-Filters, nachgebildet. Das Modellfilter 25a liefert an seinem Ausgang die selbe oder nahezu die gleiche Signalfolge, wie sie der AD-Wandler 19 - Fig. 3 - zufolge des Ausgangssignals des Magnetfeldlesekopfes 10 liefert, wenn keine Magnetkarte 3 gelesen wird und nur das Störfeld 18 auf den Magnetfeldlesekopf 10 einwirkt. In der Signalprozessoreinheit 21 wird weiters das berechnete Störsignal vom Ausgangs- bzw. Summensignal des Magnetfeldlesekopfes 10 subtrahiert und das verbleibende bzw. resultierende Signal wird entweder über einen DA-Wandler 19" - Fig. 3 - in ein analoges Signal rückgewandelt und der originären Auswerte- und Steuerschaltung 11 für die Decodierung der Kartendaten zugeführt (Fig. 3) oder es wird diese Decodierung bereits in der Signalprozessoreinheit 21 mit Hilfe geeigneter Algorithmen und Softwaremodule durchgeführt (Fig. 4). Wesentlich ist, dass der Einfluss des Störfeldes 18 der Störfeldspule 17 auf das Ausgangs- bzw. Summensignals des Magnetfeldlesekopfes 10 kompensiert bzw. weggefiltert wird, oder dass ein selektives Herausfiltern des Nutzsignals aus dem Ausgangs- bzw. Summensignal des autorisierten Magnetfeldlesekopfes 10 erfolgt. Die Evaluierung oder Weiterverarbeitung des Nutzsignals kann innerhalb der Lesevorrichtung 1 oder in peripheren elektronischen Einheiten erfolgen.

Hierfür umfasst der Störfeldgenerator 16 das signaltechnische Modell 25, welches zur Nachbildung des Einflusses des Störfelds 18 auf das Ausgangs- bzw. Summensignal des autorisierten Magnetfeldlesekopfes 10 ausgebildet ist. Diese modellhafte Nachbildung ist zur Kompensation des Einflusses des Störfelds 18 auf das Ausgangs- bzw. Summensignal des autorisierten Magnetfeldlesekopfes 10 und somit zur Rekonstruierung eines von einem zugeführten kartenförmigen Datenträger 2 abhängigen Nutzsignals aus dem Ausgangs- bzw. Summenssignal des autorisierten Magnetfeldlesekopfes 10 ausgebildet.

Günstig ist es, wenn die Sample-Rate und die Verarbeitungsrate des vorhergehend beschriebenen, diskreten Abtastsystems bzw. der Signalverarbeitungseinheit mehr als doppelt so hoch sind, als die höchsten Frequenzanteile des Nutzsignals im Signal des Magnetfeldlesekopfes 10 beim Lesen eines magnetischen Datenträgers 2. Dadurch wird eine vollständige und eindeutige Erfassung der im Nutzsignal enthaltenen Informationen sichergestellt.

Vorteilhaft ist es, wenn das Modellfilter 25a adaptiv ausgebildet ist und in der Signalprozessoreinheit 21 Algorithmen bzw. Softwaremodule implementiert sind, mit welchen die Filterkoeffizienten des Modellfilters 25a zumindest einmalig in einem Kalibriervorgang automatisch so angepasst werden, dass das Übertragungsverhalten bzw. die Wirkungsweise des signaltechnischen Modells 25 dem Übertragungsverhalten des realen Signalpfades über die Störfeldspule 17 entspricht. Die im Kalibrierverfahren ermittelten Filterkoeffizienten werden vorzugsweise nichtflüchtig in einem Speicher 30 - Fig. 6 - abgelegt, so dass sich bei einer Wiederinbetriebnahme des Störfeldgenerators 16 ein abermaliger Kalibriervorgang erübrigt. Zudem steht durch die Speicherung der Filterkoeffizienten ein Satz von Referenzkoeffizienten zur Verfügung, der das Übertragungsverhalten des ursprünglichen und nicht manipulierten Zustandes der Lesevorrichtung 1 beschreibt. Zur Ermittlung der geeigneten Filterkoeffizienten eignen sich verschiedene, zum Teil langjährig bekannte Algorithmen und Verfahren aus dem Stand der Technik, wie beispielsweise der Least-Mean-Square Algorithmus (LMS-Algorithmus).

Durch eine geräteindividuelle Adaption des Modellfilters 25a erübrigt sich die Verwendung eines fixen bzw. stets gleich bleibenden signaltechnischen Modells 25 für alle Geräteexemplare bzw. alle Lesevorrichtungen 1. Durch diese geräteindividuelle Adaption der Wirkungsweise des signaltechnischen Modells 25 werden in vorteilhafter Weise Probleme im laufenden Betrieb der Lesevorrichtung 1, insbesondere zufolge von Bauteil- und Fertigungstoleranzen sowie der wechselnden Einflüsse zufolge variabler Einbausituationen, vermieden oder zumindest stark reduziert.

Vorteilhaft ist weiters, wenn das digitale Modellfilter 25a auch nach einem initialen Kalibriervorgang weiterhin mit geringer Adaptionsgeschwindigkeit adaptiert wird, d.h. die Filterkoeffizienten des signaltechnischen Modells 25 an ein sich langsam veränderndes Übertragungsverhalten angepasst werden. Auch ohne manipulatorische Eingriffe kann es nämlich zu geringen Änderungen im Übertragungsverhalten kommen, beispielsweise durch temperatur- oder alterungsbedingte Änderungen von Bauteilkenngrößen. Durch eine fortlaufende Adaption des Modellfilters 25a ist sichergestellt, dass der Störfeldeinfluss auf den Magnetfeldlesekopf 10 der Lesevorrichtung 1 auch bei geringen Änderungen des Übertragungsverhaltens optimal kompensiert wird. Trotz fortlaufender bzw. periodischer Adaption ist es vorteilhaft, einen initialen Kalibriervorgang vorzusehen, bei dem die Modellparameter für das Übertragungsverhalten im ursprünglichen Gerätezustand ermittelt und nichtflüchtig gespeichert werden. Diese gespeicherten Modellparameter dienen einerseits als Power-On Startwerte für das signaltechnische Modell 25, sodass die Störfeldkompensation auch unmittelbar nach dem Einschalten der Lesevorrichtung 1 ausreichend gut arbeitet. Andererseits können die gespeicherten Modellparameter als Vergleichswerte für die Beurteilung des Vorliegens von Manipulationen oder Defekten der Lesevorrichtung 1 dienen. In diesem Fall wird vorzugsweise nicht das verbleibende, nicht mehr vollständig kompensierbare Störsignal als Kennzeichen für eine Manipulation oder einen Defekt herangezogen, sondern die Abweichung der laufend kalibrierten Modellparameter gegenüber den ursprünglich ermittelten und gespeicherten Modellparametern.

Entsprechend einer vorteilhaften Ausführung ist vorgesehen, das hinsichtlich des Störfeldeinflusses korrigiertes Ausgangssignal des autorisierten Magnetfeldlesekopfes 10 in jenen Phasen, in denen kein magnetischer Datenträger 2 in die Lesevorrichtung 1 eingeführt ist, dahingehend zu überwachen, ob es eine bestimmte gesamte oder spektrale Leistung übersteigt. Im Falle des Zutreffens wird eine entsprechende Status- oder Fehlerinformation für eine übergeordnete Gerätesteuerung zur Verfügung gestellt, nachdem dies ein Anzeichen für manipulatorische Eingriffe ist.

Gemäß einer weiteren vorteilhaften Ausführungsform wird das breitbandige stochastische Störsteuersignal beispielsweise mittels eines digitalen Filters, insbesondere mittels eines Bandpassfilters 24, auf eine Bandbreite begrenzt, welche zumindest einen Teil der Bandbreite des Nutzsignals zufolge der auf der Magnetkarte 3 aufgezeichneten Daten sowie einen bestimmten angrenzenden Frequenzbereich umfasst. Durch die Einschränkung der Bandbreite auf den für das Nutzsignal typischen Bereich nimmt die erforderliche bzw. aufzubringende Gesamtleistung des Störsteuersignals im Verhältnis zu seiner Leistung und Wirkung im Frequenzbereich des Nutzsignals ab bzw. kann umgekehrt mit gleicher Ausgangsleistung eine höhere Wirkung im Spektralbereich des Nutzsignals erzielt werden und damit der Anteil des wirksamen Störsteuersignals gegenüber dem Anteil des Nutzsignals erhöht werden. Die Dimensionierung der Verstärker- bzw. Anpassungsstufe 20' - Fig. 3 - sowie die Dimensionierung der Störfeldspule 17 kann dadurch umgekehrt für eine geringere Gesamtleistung erfolgen, so dass damit in der Regel auch eine kompaktere Bauweise und ein energiesparsamerer Betrieb des Störfeldgenerators 16 bzw. der Lesevorrichtung 1 ermöglicht wird.

Gemäß einer vorteilhaften Weiterbildung kann dem stochastischen Störsteuersignal zusätzlich eine deterministische Signalkomponente überlagert werden. Diese deterministische Signalkomponente ähnelt in wesentlichen Eigenschaften dem Nutzsignal beim Lesen einer Magnetkarte 3. Die deterministische Signalkomponente repräsentiert jedoch letztlich keine gültigen Daten. Durch diese Maßnahme wird das Rekonstruieren des ungestörten Signals bzw. das Ermitteln des Nutzsignals aus dem Signal des manipulatorisch angebrachten Magnetfeldlesekopfes 14 zusätzlich erschwert. Diese zusätzliche Signalkomponente kann darüber hinaus noch variable, insbesondere zufällige Merkmale aufweisen, die eine Unterscheidung bzw. signalverarbeitungstechnische Trennung von jenem Signal, das von der Magnetkarte 3 stammt, nochmals erschwert.

Die vorteilhafte Weiterbildung gemäß Fig. 4 sieht die Verwendung zumindest einer weiteren Störfeldspule 22 vor, die zur ersten Störfeldspule 17 örtlich distanziert oder in ihrer Magnetfeldausrichtung abweichend orientiert oder in ihrer Magnetfeldgeometrie abweichend ausgebildet ist. Diese zweite Störfeldspule 22 wird mit einem zweiten, ebenfalls stochastischen Störsteuersignal gespeist, welches vom Störsignal für die erste Störfeldspule 17 linear unabhängig ist. Dies bedeutet, dass die Störsteuersignale für die verschiedenen Störfeldspulen 17, 22 jeweils nicht miteinander korreliert sind. Es wird dadurch gewissermaßen ein mehrkanaliges Störfeld 18 gebildet, wodurch die Möglichkeiten, aus dem gestörten Signal eines manipulatorisch angebrachten Magnetfeldlesekopfes 14 das relevante, die Kartendaten repräsentierende Nutzsignal wieder zu rekonstruieren, nochmals deutlich verringert werden, wodurch die Manipulationssicherheit abermals verbessert wird.

Gemäß einer vorteilhaften Weiterbildung kann die vorhergehend beschriebene Betrugsabwehrvorrichtung der Lesevorrichtung 1 bzw. eines damit ausgestatten Automaten auch zur automatischen Verriegelung der Zuführöffnung 6 der Lesevorrichtung 1 ausgebildet sein, falls eine Manipulation festgestellt wurde, der Störfeldgenerator 16 nicht funktioniert oder der signalverarbeitende Teil der Betrugsabwehrvorrichtung inaktiv ist.

Wenn im Vorhergehenden von "Signalen" im Umfeld des digitalen Abtastsystems, d.h. in Bezug auf die digitale Signalprozessoreinheit 21 gesprochen wurde, so ist darunter in erster Linie eine Folge von digitalen Abtastwerten zu verstehen.

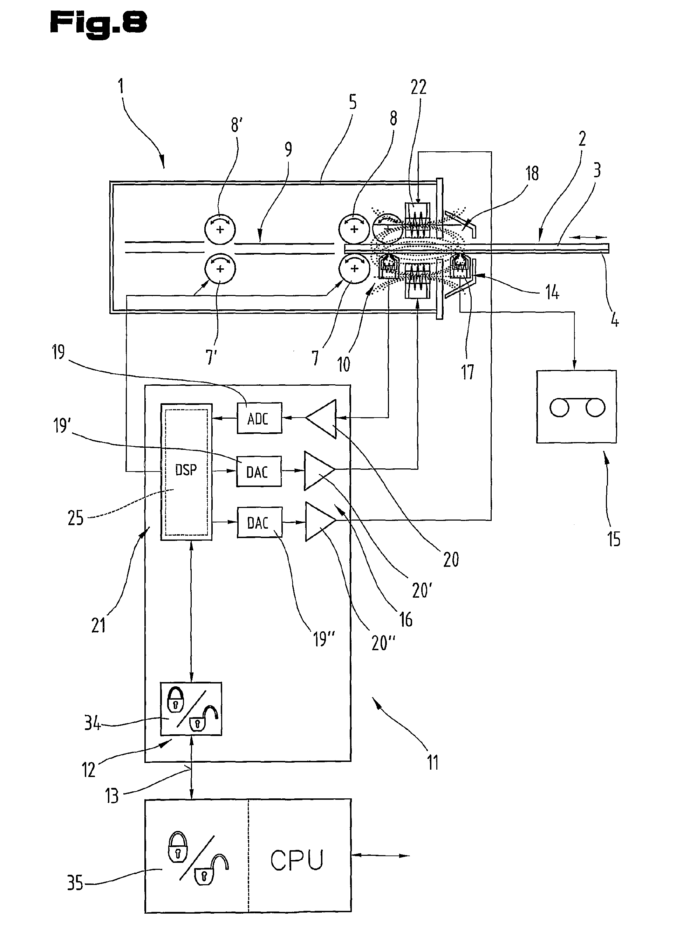

In Fig. 8 ist eine vorteilhafte Weiterbildung der Lesevorrichtung 1 bzw. der Betrugsabwehrvorrichtung veranschaulicht, wobei für vorhergehend bereits beschriebene Teile gleiche Bezugszeichen verwendet wurden und die vorhergehenden Beschreibungen sinngemäß auf gleiche Teile mit gleichen Bezugszeichen übertragbar sind. Die Darstellung in Fig. 8 zeigt eine technische Weiterbildung der Ausführung gemäß Fig. 4, wobei es selbstverständlich auch möglich ist, diese Weiterbildung bei der Ausführungsvariante nach Fig. 3 anzuwenden.

Entsprechend dieser vorteilhaften Weiterbildung wird das rekonstruierte Nutzsignal innerhalb der Lesevorrichtung 1 bzw. mittels der Auswerte- und Steuervorrichtung 11 verschlüsselt. Hierfür wird ein üblicher Verschlüsselungs- bzw. Entschlüsselungsalgorithmus 34 zur datentechnischen Ver- und/oder Entschlüsselung von Signalen bzw. Daten eingesetzt. Als geeignete Ver- und Entschlüsselungsverfahren können beispielsweise DES, TripleDES, RSA oder dergleichen eingesetzt werden.

Das entsprechend verschlüsselte Nutzsignal, welches auf den magnetisch codierten Daten eines zugeführten Datenträgers 2 basiert, wird dann über die Datenschnittstelle 12 bzw. über die zumindest eine Status- bzw. Signalleitung 13 einer übergeordneten bzw. peripheren elektronischen Einheit, beispielsweise einem Dienstleistungsautomaten, bereitgestellt oder übertragen. In dieser autorisierten elektronischen Einheit erfolgt vorerst eine Entschlüsselung des empfangenen, verschlüsselten Signals mittels einem adäquaten Entschlüsselungs- bzw. Verschlüsselungsalgorithmus 35, sodass daraufhin eine Evaluierung bzw. Weiterverarbeitung des Nutzsignals respektive von dessen Daten erfolgen kann.

Zweckmäßig ist es, wenn die Verschlüsselung des Nutzsignals aus dem Datenträger 2 respektive von dessen Daten mittels der Signalprozessoreinheit 21, welche darüber hinaus zum Kompensieren oder Wegfiltern des Einflusses des Störfeldes 18 der Störfeldspule 17 ausgebildet ist, vorgenommen wird. In ähnlicher Weise erfolgt die Entschlüsselung bevorzugt durch die Recheneinheit der peripheren Einheit, welche üblicherweise durch einen Industrie-PC mit korrespondierender Software gebildet ist.

Analog dazu kann beim Schreiben von Daten auf den Magnetstreifen 4 die Verschlüsselung mittels dem Entschlüsselungs- bzw. Verschlüsselungsalgorithmus 35 im Industrie-PC vorgenommen werden und die Entschlüsselung mittels dem Verschlüsselungs- bzw. Entschlüsselungsalgorithmus 34 der Auswerte- und Steuervorrichtung 11, insbesondere durch die digitale Signalprozessoreinheit 21 erfolgen.

Durch diese vorteilhafte Weiterbildung ist es selbst dann, wenn manipulatorische Eingriffe im Inneren der Lesevorrichtung 1 erfolgen, nicht mehr möglich, an verwertbare Nutzsignale bzw. Daten des Datenträgers 2 zu kommen. Mit den vorhergehend beschriebenen Maßnahmen kann in vielen Fällen sogar auf eine relativ aufwändige und teure Kapselung der Lesevorrichtung 1 zum Schutz vor unbefugten Manipulationen verzichtet werden. Der eventuell noch zu schützende, sicherheitsrelevante Bereich, ist auf einen Chip bzw. einen kleinen Bereich, einiger Chips innerhalb der Lesevorrichtting 1 beschränkt. Dies ermöglicht bei entsprechender Absicherung einen umfassenden Betrugs- bzw. Manipulationsschutz mit relativ geringen Kosten.

Die den eigenständigen erfinderischen Lösungen zugrunde liegende Aufgabe kann der Beschreibung entnommen werden.

Vor allem können die einzelnen in den Fig. 3, 4, 5, 6, 7, 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1. | Lesevorrichtung | 34. | Verschlüsselungs- bzw. Entschlüsselungsalgorithmus |
| 2. | kartenförmiger Datenträger | | |
| 3. | Magnetkarte | 35. | Entschlüsselungs- bzw. Verschlüsselungsalgorithmus |
| 4. | Magnetstreifen | | |
| 5. | Gehäuse | | |
| | | | |
| 6. | Zuführöffnung | | |
| 7,7'. | Transportrolle | | |
| 8, 8'. | Gegendruckrolle | | |
| 9. | Führungselement | | |
| 10. | Magnetfeldlesekopf (autorisierter) | | |
| | | | |
| 11. | Auswerte- und Steuerschaltung | | |
| 12. | Signal- bzw. Datenschnittstelle | | |
| 13. | Status- bzw. Signalleitung | | |
| 14. | Magnetfeldlesekopf (nicht autoris.) | | |
| 15. | Aufzeichnungsgerät | | |
| | | | |
| 16. | Störfeldgenerator | | |
| 17. | Störfeldspule | | |
| 18. | Störfeld | | |
| 19-19". | AD-/DA-Wandler | | |
| 20-20". | Verstärker- bzw. Anpassungsstufe | | |
| | | | |
| 21. | digitale Signalprozessoreinheit | | |
| 22. | Störfeldspule (zweite) | | |
| 23. | Pseudo-Zufallszahlengenerator | | |
| 24. | Bandpassfilters | | |
| 25. | signaltechnisches Modell | | |
| | | | |
| 25a, 25a'. | Modellfilter (digital) | | |
| 26. | Summationspunkt | | |
| 27. | Rückführungspfad | | |
| 28. | Adaptionsalgorithmus | | |
| 29. | Steuerleitung | | |
| | | | |
| 30. | Speicher | | |
| 31. | Auswerteeinheit | | |
| 32. | Antriebssteuerung | | |
| 33. | Interface | | |

## Patentansprüche

1. Verfahren zur Absicherung einer Lesevorrichtung (1) für kartenförmige Datenträger gegen unerlaubtes Auswerten oder Kopieren von magnetisch codierten Daten, welche an der Lesevorrichtung (1) für kartenförmige Datenträger (2) erfasst werden,
wobei mittels einer Störfeldspule (17), welche im Nahbereich einer Zuführöffnung (6) zur Zuführung von kartenförmigen Datenträgern (2) oder im Bereich eines ordnungsgemäßen bzw. autorisierten Magnetfeldlesekopfes (10) der Lesevorrichtung (1) angeordnet ist, ein magnetisches Störfeld (18) erzeugt wird, um einen spionageartig oder in betrügerischer Absicht unter Umständen angebrachten Magnetfeldlesekopf (14) bei der Aufzeichnung des Magnetfeldes eines kartenförmigen Datenträgers (2) mit diesem Störfeld (18) zu stören oder zu beeinflussen,
**gekennzeichnet durch**
- Implementierung oder Anordnung wenigstens einer Störfeldspule (17) derart, dass der autorisierte Magnetfeldlesekopf (10) beim Lesen der magnetisch codierten Daten eines kartenförmigen Datenträgers (2) auch **durch** das Störfeld (18) der Störfeldspule (17) beeinflusst wird,
- Erfassung des aus dem Nutzsignal eines kartenförmigen Datenträgers (2) und aus den Einflüssen des Störfeldes (18) gebildeten Ausgangs- bzw. Summensignals des autorisierten Magnetfeldlesekopfes (10),
- Kompensieren oder Wegfiltern des Einflusses des Störfelds (18) der Störfeldspule (17) im Ausgangs- bzw. Summensignal des autorisierten Magnetfeldlesekopfes (10) oder selektives Herausfiltern des Nutzsignals aus dem Ausgangs- bzw. Summensignal des autorisierten Magnetfeldlesekopfes (10),
- Evaluierung oder Weiterverarbeitung des Nutzsignals innerhalb der Lesevorrichtung (1) oder in peripheren elektronischen Einheiten.

2. Verfahren nach Anspruch 1, **gekennzeichnet durch** rechnerische Kompensation des Störeinflusses des Störfeldes (18) gegenüber dem Ausgangs-bzw. Summensignal des autorisierten Magnetfeldlesekopfes (10) mittels einer Signalprozessoreinheit (21), wobei mit der Signalprozessoreinheit (21) unter anderem ein signaltechnisches Modell (25) implementiert ist, **durch** welches der Einfluss eines Störsteuersignals respektive des damit erzeugten Störfeldes (18) auf das Ausgangs- bzw. Summensignal des autorisierten Magnetfeldlesekopfes (10) abgebildet wird.

3. Verfahren nach Anspruch 1, **gekennzeichnet durch** eine Positionierung der Störfeldspule (17) und/oder **durch** eine Dimensionierung der Feldstärke oder Feldcharakteristik der Störfeldspule (17) und/oder **durch** eine Dimensionierung der Erfassungsempfindlichkeit des autorisierten respektive ordnungsgemäßen Magnetfeldlesekopfes (10) derart, dass das Störfeld (18) der Störfeldspule (17) zumindest während dem Lesen der magnetisch codierten Daten eines kartenrormigen Datenträgers (2) auf einen in betrügerischer Absicht angebrachten Magnetfeldlesekopf (14) Einfluss nimmt, als auch auf den berechtigten respektive autorisierten Magnetfeldlesekopf (10) einwirkt und dessen Ausgangs- bzw. Summensignal beeinflusst.

4. Verfahren nach Anspruch 1, **gekennzeichnet durch** eine Erzeugung des Störfelds (18) aus einem stochastischen elektrischen Störsteuersignal.

5. Verfahren nach Anspruch 4, **gekennzeichnet durch** eine Erzeugung des elektrischen Störsteuersignals aus einer Folge von pseudozufälligen Abtastwerten unter Verwendung eines Pseudo-Zufallszahlengenerators (23).

6. Verfahren nach Anspruch 1, **gekennzeichnet durch** Herausrechnen des Nutzsignals aus dem Ausgangs- bzw. Summensignal des Magnetfeldlesekopfes (10) unter Einbeziehung der Information über den zeitlichen Verlauf eines stochastischen Störsteuersignals respektive Störfelds (18).

7. Verfahren nach Anspruch 1, **gekennzeichnet durch** eine Ermittlung des Übertragungsverhaltens einer Übertragungsstrecke ausgehend von einem emittierten Störsteuersignal bis zum erfassten Ausgangs- bzw. Summensignal am autorisierten Magnetfeldlesekopf (10), und **durch** Heranziehen des ermittelten Übertragungsverhaltens für die Kompensation des Einflusses des Störfelds (18).

8. Verfahren nach Anspruch 1, **gekennzeichnet durch** eine Ermittlung des diskreten Übertragungsverhaltens einer Übertragungsstrecke aus der Folge von Abtastwerten korrespondierend zu einem emittierten Störsteuersignal zu der Folge von Abtastwerten korrespondierend zum erfassten Ausgangssignal am autorisierten Magnetfeldlesekopf (10), und **durch** Heranziehen des ermittelten Übertragungsverhaltens für eine rechnerische Kompensation des Störfeldeinflusses.

9. Verfahren nach Anspruch 8, **gekennzeichnet durch** eine Abbildung des Übertragungsverhaltens der Übertragungsstrecke in einem digitalen Modellfilter (25a), dessen Wirkung **durch** einen Satz von numerischen Filterkoeffizienten beschrieben wird.

10. Verfahren nach Anspruch 1, **gekennzeichnet durch** eine Ausbildung des Störfelds (18) während vom Magnetfeldlesekopf (10) die magnetisch codierten Daten eines kartenförmigen Datenträgers (2) erfasst werden.

11. Verfahren nach Anspruch 1, **dadurch gekennzeichnet, dass** das hinsichtlich des Störfeldeinflusses korrigierte Ausgangssignal des autorisierten Magnetfeldlesekopfes (10) in jenen Phasen, in denen kein kartenförmiger Datenträger (2) in die Lesevorrichtung (1) eingeführt ist, dahingehend überwacht wird, ob es eine bestimmte gesamte oder spektrale Leistung übersteigt und dass im Falle des Zutreffens eine entsprechende Status- oder Fehlerinformation für eine übergeordnete Gerätesteuerung zur Verfügung gestellt wird.

12. Verfahren nach Anspruch 9, **dadurch gekennzeichnet, dass** das digitale Modellfilter (25a) im laufenden Betrieb entweder ständig oder in wiederkehrenden Abständen an das tatsächliche Übertragungsverhalten der realen Signalübertragungsstrecke, welche zumindest die Störfeldspule (17) und den Magnetfeldlesekopf (10) der Lesevorrichtung (1) beinhaltet, angepasst wird.

13. Verfahren nach Anspruch 2, **dadurch gekennzeichnet, dass** dem Störsteuersignal zumindest zeitweise ein zusätzliches Störsteuersignal überlagert wird, welches in wesentlichen Eigenschaften einem Signal ähnelt, das beim Lesen des Magnetstreifens eines kartenförmigen Datenträgers (2) vom Magnetfeldlesekopf (10) als Nutzsignal erhalten wird.

14. Betrugsabwehrvorrichtung zur Verwendung mit einer Lesevorrichtung (1) für die autorisierte Erfassung von auf einem kartenförmigen Datenträger (2) magnetisch gespeicherten Informationen,
welche Lesevorrichtung (1) einen ersten respektive autorisierten Magnetfeldlesekopf (10) zum Abtasten eines kartenförmigen Datenträgers (2) und eine Auswerte- und Steuerschaltung (11) zum Auswerten des Ausgangssignals des autorisierten Magnetfeldlesekopfes (10) und zur Umsetzung der im Ausgangssignal enthaltenen Informationen in einen digitalen Datensatz umfasst,
mit einem Störfeldgenerator (16) der ein magnetisches Störfeld (18) erzeugt, das zur störenden Beeinflussung eines im Nahbereich der Lesevorrichtung (1) in betrügerischer Absicht unter Umständen angebrachten, zweiten respektive nicht autorisierten Magnetfeldlesekopfes (14) vorgesehen ist,
**dadurch gekennzeichnet, dass**
der Störfeldgenerator (16) ein signaltechnisches Modell (25) umfasst, welches zur Nachbildung des Einflusses des Störfelds (18) auf das Ausgangs- bzw. Summensignal des autorisierten Magnetfeldlesekopfes (10) ausgebildet ist und
diese modellhafte Nachbildung zur Kompensation des Einflusses des Störfelds (18) auf das Ausgangs- bzw. Summensignal des autorisierten Magnetfeldlesekopfes (10) und somit zur Rekonstruierung eines von einem zugeführten kartenförmigen Datenträger (2) abhängigen Nutzsignals aus dem Ausgangs- bzw. Summenssignal des autorisierten Magnetfeldlesekopfes (10) ausgebildet ist.

15. Betrugsabwehrvorrichtung nach Anspruch 14, **dadurch gekennzeichnet, dass** der Störfeldgenerator (16) wenigstens eine Störfeldspule (17) umfasst, die im Nahbereich einer Zuführöffnung (6) für einen kartenförmigen Datenträger (2) positioniert ist und mit einem nichtperiodischen, stochastischen, insbesondere pseudozufälligen, Störsteuersignal gespeist wird.

16. Betrugsabwehrvorrichtung nach Anspruch 14, **dadurch gekennzeichnet, dass** die spektrale Leistungsdichte eines Störsteuersignals des Störfeldgenerators (16) innerhalb eines vorbestimmten Frequenzbandes, welches Frequenzband zumindest einen Teil des üblichen Frequenzbereichs des Nutzsignals beim Erfassen des kartenförmigen Datenträgers (2) umfasst, deutlich höher ist, als außerhalb dieses vorbestimmten Frequenzbandes.

17. Betrugsabwehrvorrichtung nach Anspruch 14, **dadurch gekennzeichnet, dass** wesentliche Teile zur Signalverarbeitung, insbesondere das signaltechnische Modell (25) zur Kompensation des Störfeldeinflusses, durch ein diskretes Abtastsystem gebildet sind, welches zumindest einen Prozessor, insbesondere eine Signalprozessoreinheit (21), einen Analog-Digital Wandler (19) und einen Digital-Analog Wandler (19') umfasst.

18. Betrugsabwehrvorrichtung nach Anspruch 14, **dadurch gekennzeichnet, dass** das signaltechnische Modell (25) durch ein digitales Modellfilter (25a), insbesondere durch ein FIR-Filter, gebildet ist.

19. Betrugsabwehrvorrichtung nach Anspruch 14, **dadurch gekennzeichnet, dass** der Störfeldgenerator (16) einen nichtflüchtigen Speicher (30) zum Speichern wenigstens eines Satzes von Filterparametern eines digitalen Modellfilters (25a) umfasst.

20. Betrugsabwehrvorrichtung nach Anspruch 19, **dadurch gekennzeichnet, dass** der wenigstens eine Satz von Filterparametern ein Modellfilter (25a) definiert, welches das Übertragungsverhalten oder die Übertragungscharakteristik für das über die Störspule (17) emittierte und nachfolgend über den autorisierten Magnetfeldlesekopf (10) wieder erfasste Störsteuersignal im unmanipulierten, voll funktionsfähigen Zustand der Lesevorrichtung (1) nachbildet.

21. Betrugsabwehrvorrichtung nach Anspruch 20, **dadurch gekennzeichnet, dass** das Modellfilter (25a) im Betrieb fortwährend oder in regelmäßigen Abständen adaptiert und einem veränderlichen Übertragungsverhalten der realen Strecke fortwährend angepasst wird, und der zumindest eine Satz von gespeicherten Filterparametern zumindest wiederkehrend mit dem Satz von Filterparametern des adaptierten Modellfilters (25a) verglichen wird und die Betrugsabwehrvorrichtung im Falle qualifizierter Abweichungen zur Abgabe einer Status- oder Fehlerinformation für eine übergeordnete Gerätesteuerung ausgebildet ist.

22. Betrugsabwehrvorrichtung nach Anspruch 14, **dadurch gekennzeichnet, dass** wenigstens eine weitere Störfeldspule (22) angeordnet ist und die Störfeldspulen (17, 22) mit unterschiedlicher räumlicher Anordnung oder unterschiedlicher Ausrichtung oder unterschiedlicher Magnetfeldgeometrie ausgebildet und insbesondere in der Nähe einer Zuführöffnung (6) für den kartenförmigen Datenträger (2) angebracht sind und von nicht miteinander korrelierten, stochastischen Störsteuersignalen gespeist sind.

23. Betrugsabwehrvorrichtung nach Anspruch 14, **dadurch gekennzeichnet, dass** die Störfeldspule (17) und der Magnetfeldlesekopf (10) zu einer gemeinsamen baulichen Einheit kombiniert sind.

24. Lesevorrichtung für die autorisierte Erfassung von auf einem kartenförmigen Datenträger (2) magnetisch gespeicherten Informationen, **dadurch gekennzeichnet, dass** die Lesevorrichtung (1) eine Betrugsabwehrvorrichtung nach Anspruch 14 umfasst.

25. Lesevorrichtung nach Anspruch 24, **dadurch gekennzeichnet, dass** die Betrugsabwehrvorrichtung zur automatischen Verriegelung einer Zuführöffnung (6) für kartenförmige Datenträger (2) ausgebildet ist, falls durch den Störfeldgenerator (16) der Lesevorrichtung (1) eine Fehlfunktion oder eine Manipulation festgestellt wurde.

26. Bankdienstleistungsautomat oder Zutrittskontrollsystem, **dadurch gekennzeichnet, dass** der Bankdienstleistungsautomat oder das Zutrittskontrollsystem eine Lesevorrichtung nach Anspruch 24 umfasst.

27. Verfahren nach Anspruch 1, **gekennzeichnet durch** eine Verschlüsselung des Nutzsignals respektive dessen Daten in der Lesevorrichtung (1), **durch** eine Weiterleitung des verschlüsselten Nutzsignals respektive dessen Daten, und **durch** eine Entschlüsselung des Nutzsignals respektive dessen Daten in einer autorisierten, peripher angeordneten elektronischen Einheit.

28. Verfahren nach Anspruch 27, **gekennzeichnet durch** eine Verschlüsselung des Nutzsignals respektive dessen Daten mittels einer Signalprozessoreinheit (21), welche darüber hinaus zum Kompensieren oder Wegfiltern des Einflusses des Störfeldes (18) der Störfeldspule (17) ausgebildet ist.

## Claims

1. Method of securing a reading device (1) for card-shaped data carriers to prevent unauthorised evaluation or copying of magnetically encoded data which is detected in the reading device (1) for card-shaped data carriers (2),
a magnetic noise field (18) being generated by means of a noise field coil (17) disposed in the immediate vicinity of an insertion orifice (6) for inserting card-shaped data carriers (2) or in the region of a legitimate or authorised magnetic field reading head (10) of the reading device (1) in order to disrupt or affect with this noise field (18) a magnetic field reading head (14) which might have been fitted with a view to interception or with fraudulent intent under certain circumstances whilst the magnetic field of a card-shaped data carrier (2) is being recorded,
**characterised by**
- operating or disposing at least one noise field coil (17) so that the authorised magnetic field reading head (10) is also affected by the noise field (18) of the noise field coil (17) as the magnetically encoded data of a card-shaped data carrier (2) is being read,
- detecting the output or sum signal of the authorised magnetic field reading head (10) generated from the wanted signal of a card-shaped data carrier (2) and from the effects of the noise field (18),
- compensating or filtering out the effect of the noise field (18) of the noise field coil (17) in the output or sum signal of the authorised magnetic field reading head (10) or selectively filtering the wanted signals out of the output or sum signal of the authorised magnetic field reading head (10),
- evaluating or further processing the wanted signal inside the reading device (1) or in peripheral electronic units.

2. Method according to claim 1, **characterised by** computerised compensation of the noise effect of the noise field (18) with respect to the output or sum signal of the authorised magnetic field reading head (10) by means of a signal processor unit (21), a signal-based model (25) being employed by the signal processor unit (21) amongst other things, by means of which an effect of a noise control signal or the noise field (18) generated by it on the output or sum signal of the authorised magnetic field reading head (10) is reproduced.

3. Method according to claim 1, **characterised by** positioning the noise field coil (17) and/or dimensioning the field intensity or field characteristic of the noise field coil (17) and/or dimensioning the detection sensitivity of the authorised or legitimate magnetic field reading head (10) so that the noise field (18) of the noise field coil (17) acts on a magnetic field reading head (14) fitted with fraudulent intent, at least when the magnetically encoded data of a card-shaped data carrier (2) is being read and also acts on the legitimate or authorised magnetic field reading head(10) and affects its output or sum signal.

4. Method according to claim 1, **characterised by** generating the noise field (18) from a stochastic electric noise control signal.

5. Method according to claim 4, **characterised by** generating the electric noise control signal from a sequence of pseudo-random scanning values using a pseudo-random number generator (23).

6. Method according to claim 1, **characterised by** computing the wanted signal out of the output or sum signal of the magnetic field reading head (10) taking account of information about the time sequence of a stochastic noise control signal or noise field (18).

7. Method according to claim 1, **characterised by** determining the transmission behaviour or a transmission route from an emitted noise control signal to the detected output or sum signal on the authorised magnetic field reading head (10), and by applying the determined transmission behaviour in order to compensate the effect of the noise field (18).

8. Method according to claim 1, **characterised by** determining the discrete transmission behaviour of a transmission route from the sequence of scanning values corresponding to an emitted noise control signal to the sequence of scanning values corresponding to the detected output signal at the authorised magnetic field reading head (10), and by applying the determined transmission behaviour in order to compensate the effect of the noise field on a computerised basis.

9. Method according to claim 8, **characterised by** reproducing the transmission behaviour of the transmission route in a digital model filter (25a), the effect of which is described by a set of digital filter coefficients.

10. Method according to claim 1, **characterised by** generating the noise field (18) whilst the magnetically encoded data of a card-shaped data carrier (2) is being detected by the magnetic field reading head (10).

11. Method according to claim 1, **characterised in that** the output signal of the authorised magnetic field reading head (10) corrected with respect to the effect of the noise field is monitored during those phases when no card-shaped data carrier (2) is being inserted in the reading device (1) to ascertain whether a specific total or spectral power is exceeded and, if such is the case, a corresponding status or error message is made available to a primary device controller.

12. Method according to claim 9, **characterised in that** the digital model filter (25a) is adapted to the actual transmission behaviour of the real signal transmission route containing at least the noise field coil (17) and the magnetic field reading head (10) of the reading device (1) during ongoing operation, either constantly or at periodic intervals.

13. Method according to claim 2, **characterised in that** an additional noise control signal is at least periodically superimposed on the noise control signal which, in terms of essential properties, is similar to a signal that is obtained as a wanted signal when the magnetic stripe of a card-shaped data carrier (2) is read by the magnetic field reading head (10).

14. Anti-tampering system for use with a reading device (1) for the authorised detection of information magnetically stored on a card-shaped data carrier (2),
which reading device (1) comprises a first or authorised magnetic field reading head(10) for scanning a card-shaped data carrier (2) and an evaluation and control circuit (11) for evaluating the output signal of the authorised magnetic field reading head (10) and for converting the information contained in the output signal into a digital data set,
with a noise field generator (16) which generates a magnetic noise field (18) in order to apply noise to a second or unauthorised magnetic field reading head (14) which might have been fitted in the immediate vicinity of the reading device (1) with fraudulent intent under certain circumstances,
**characterised in that**
the noise field generator (16) comprises a signal-based model (25) which is configured to copy the effect of the noise field (18) on the output or sum signal of the authorised magnetic field reading head (10) and
this modelled copy is designed to compensate the effect of the noise field (18) on the output or sum signal of the authorised magnetic field reading head (10) and thus reconstruct a wanted signal dependent on an inserted card-shaped data carrier (2) from the output or sum signal of the authorised magnetic field reading head (10).

15. Anti-tampering system according to claim 14, **characterised in that** the noise field generator (16) comprises at least one noise field coil (17) positioned in the immediate vicinity of an insertion orifice (6) for a card-shaped data carrier (2) which is supplied with a non-periodic, stochastic, in particular pseudo-random, noise control signal.

16. Anti-tampering system according to claim 14, **characterised in that** the spectral power density of a noise control signal of the noise field generator (16) within a predefined frequency band containing at least a part of the standard frequency range of the wanted signals is significantly higher than outside this predefined frequency band when the card-shaped data carrier (2) is being detected.

17. Anti-tampering system according to claim 14, **characterised in that** essential parts needed for processing the signals, in particular the signal-based model (25) for compensating the effect of the noise field, are provided in the form of a discrete scanning system comprising at least one processor, in particular a signal processor unit (21), an analogue to digital convertor (19) and a digital to analogue convertor (19').

18. Anti-tampering system according to claim 14, **characterised in that** the signal-based model (25) is provided in the form of a digital model filter (25a), in particular an FIR filter.

19. Anti-tampering system according to claim 14, **characterised in that** the noise field generator (16) comprises a non-volatile memory (30) for storing at least one set of filter parameters of a digital model filter (25a).

20. Anti-tampering system according to claim 19, **characterised in that** the at least one set of filter parameters defines a model filter (25a) which copies the transmission behaviour or transmission characteristic for the noise control signal which is emitted via the noise coil (17) and then detected again by the authorised magnetic field reading head (10) when the reading device (1) is in the non-manipulated, fully functional state.

21. Anti-tampering system according to claim 20, **characterised in that** the model filter (25a) is adapted during operation, continuously or at regular intervals, and is constantly adapted to a changing transmission behaviour of the real route, and the at least one set of stored filter parameters is compared at least on a recurring basis with the set of filter parameters of the adapted model filter (25a), and the anti-tampering system is configured to emit a status or error message for a primary device controller in the event of qualified variances.

22. Anti-tampering system according to claim 14, **characterised in that** at least one other noise field coil (22) is provided and the noise field coils (17, 22) are disposed in a different spatial arrangement or different orientation or have a different magnetic field geometry and in particular are mounted in the vicinity of an insertion orifice (6) for the card-shaped data carrier (2), and are supplied with stochastic noise control signals that are not correlated with one another.

23. Anti-tampering system according to claim 14, **characterised in that** the noise field coil (17) and the magnetic field reading head (10) are combined in a common structural unit.

24. Reading device for the authorised detection of information magnetically stored on a card-shaped data carrier (2), **characterised in that** the reading device (1) has an anti-tampering system according to claim 14.

25. Reading device according to claim 24, **characterised in that** the anti-tampering system is designed to automatically lock an insertion orifice (6) for card-shaped data carriers (2) if a malfunction or manipulation is detected by means of the noise field generator (16) of the reading device (1).

26. Automated cash dispenser or access control system, **characterised in that** the automated cash dispenser or access control system has a reading device according to claim 24.

27. Method according to claim 1, **characterised by** encryption of the wanted signal or its data in the reading device (1), by forwarding of the encrypted wanted signal or its data, and by decryption of the wanted signal or its data in an authorised, peripherally disposed electronic unit.

28. Method according to claim 27, **characterised by** encryption of the wanted signal or its data by means of a signal processor unit (21), which is also designed to compensate or filter out the effect of the noise field (18) of the noise field coil (17).

## Revendications

1. Procédé pour sécuriser un dispositif de lecture (1) pour supports de données en forme de carte contre toute analyse ou copie non autorisées des données à codage magnétique, lesquelles sont lues sur le dispositif de lecture (1) pour supports de données (2) en forme de carte,
une bobine à champ parasite (17), disposée dans une zone proche d'une ouverture d'introduction (6) pour introduire les supports de données (2) en forme de carte ou dans la zone d'une tête de lecture de champ magnétique (10) réglementaire ou autorisée du dispositif de lecture (1), permettant de générer un champ parasite (18) magnétique afin que, au moment de la lecture du champ magnétique d'un support de données (2) en forme de carte, ledit champ parasite (18) perturbe ou influence une tête de lecture de champ magnétique (14) de type espion ou éventuellement mise en place dans un but frauduleux,
**caractérisé par**
- implémentation ou agencement d'au moins une bobine à champ parasite (17) de telle sorte que la tête de lecture de champ magnétique (10) autorisée est également influencée par le champ parasite (18) de la bobine à champ parasite (17) au moment de la lecture des données à codage magnétique d'un support de données (2) en forme de carte,
- détection du signal de sortie ou signal cumulé de la tête de lecture de champ magnétique (10) autorisée, lequel est formé par le signal utile d'un support de données (2) en forme de carte et à partir des influences du champ parasite (18),
- compensation ou élimination par filtrage de l'influence du champ parasite (18) de la bobine à champ parasite (17) dans le signal de sortie ou signal cumulé de la tête de lecture de champ magnétique (10) autorisée ou filtrage sélectif du signal utile hors du signal de sortie ou signal cumulé de la tête de lecture de champ magnétique (10) autorisée,
- évaluation ou traitement ultérieur du signal utile à l'intérieur du dispositif de lecture (1) ou dans des unités électroniques périphériques.

2. Procédé selon la revendication 1, **caractérisé par** une compensation calculée de l'influence parasite du champ parasite (18) par rapport au signal de sortie ou signal cumulé de la tête de lecture de champ magnétique (10) autorisée au moyen d'une unité de processeur de signalisation (21), ladite unité de processeur de signalisation (21) permettant, entre autres, d'implémenter un modèle (25) de technique de signalisation, par lequel l'influence d'un signal de commande parasite ou du champ parasite (18) généré par celui-ci est reproduite sur le signal de sortie ou signal cumulé de la tête de lecture de champ magnétique (10) autorisée.

3. Procédé selon la revendication 1, **caractérisé par** un positionnement de la bobine à champ parasite (17) et/ou par un dimensionnement de l'intensité de champ ou de la caractéristique de champ de la bobine à champ parasite (17) et/ou par un dimensionnement de la sensibilité d'enregistrement de la tête de lecture de champ magnétique (10) autorisée ou réglementaire, de telle sorte que, au moins pendant la lecture des données à codage magnétique d'un support de données (2) en forme de carte, le champ parasite (18) de la bobine à champ parasite (17) influe sur une tête de lecture de champ magnétique (14) mise en place dans un but frauduleux, et agit sur la tête de lecture de champ magnétique (10) qualifiée ou autorisée et influence le signal de sortie ou signal cumulé de celle-ci.

4. Procédé selon la revendication 1, **caractérisé par** une formation du champ parasite (18) à partir d'un signal de commande parasite électrique stochastique.

5. Procédé selon la revendication 4, **caractérisé par** une formation du signal de commande parasite électrique à partir d'une suite de valeurs de balayage pseudo-aléatoires moyennant l'utilisation d'un générateur de nombres pseudo-aléatoires (23).

6. Procédé selon la revendication 1, **caractérisé par** le calcul du signal utile à partir du signal de sortie ou signal cumulé de la tête de lecture de champ magnétique (10) moyennant la prise en compte de l'information sur la propagation dans le temps d'un signal de commande parasite stochastique ou d'un champ parasite (18).

7. Procédé selon la revendication 1, **caractérisé par** une détermination du comportement de transmission d'une voie de transmission à partir d'un signal de commande parasite émis jusqu'au signal de sortie ou signal cumulé détecté sur la tête de lecture de champ magnétique (10) autorisée, et par la prise en compte du comportement de transmission déterminé pour la compensation de l'influence du champ parasite (18).

8. Procédé selon la revendication 1, **caractérisé par** une détermination du comportement de transmission discret d'une voie de transmission à partir de la suite de valeurs de balayage correspondant à un signal de commande parasite émis jusqu'à la suite de valeurs de balayage correspondant au signal de sortie détecté sur la tête de lecture de champ magnétique (10) autorisée, et par la prise en compte du comportement de transmission déterminé pour une compensation calculée de l'influence du champ parasite.

9. Procédé selon la revendication 8, **caractérisé par** une reproduction du comportement de transmission de la voie de transmission dans un filtre modèle (25a) numérique, dont l'action est définie par un ensemble de coefficients de filtrage numériques.

10. Procédé selon la revendication 1, **caractérisé par** une formation du champ parasite (18) pendant que les données à codage magnétique d'un support de données (2) en forme de carte sont détectées par une tête de lecture de champ magnétique (10).

11. Procédé selon la revendication 1, **caractérisé en ce que** le signal de sortie de la tête de lecture de champ magnétique (10) autorisée, corrigé par rapport à l'influence du champ parasite, est contrôlé dans les phases dans lesquelles aucun support de données (2) en forme de carte n'est introduit dans le dispositif de lecture (1), pour savoir s'il est supérieur à un rendement déterminé total ou spectral, et s'il en est ainsi, une information d'état ou d'erreur correspondante est mise à disposition d'une commande prioritaire de l'appareil.

12. Procédé selon la revendication 9, **caractérisé en ce que** le filtre modèle (25a) numérique en cours de service est ajusté en permanence ou à intervalles répétés au comportement de transmission réel de la voie de transmission réelle des signaux, laquelle contient au moins la bobine à champ parasite (17) et la tête de lecture de champ magnétique (10) du dispositif de lecture (1).

13. Procédé selon la revendication 2, **caractérisé en ce qu'**au signal de commande parasite est superposé au moins de temps en temps un signal de commande parasite supplémentaire, qui, dans des propriétés essentielles, s'apparente à un signal qui est reçu en tant que signal utile par la tête de lecture de champ magnétique (10) au moment de la lecture d'une bande magnétique d'un support de données (2) en forme de carte.

14. Dispositif de protection contre les fraudes, destiné à être utilisé avec un dispositif de lecture (1) pour l'enregistrement autorisé d'informations mémorisées magnétiquement sur un support de données (2) en forme de carte,
lequel dispositif de lecture (1) comporte une première tête de lecture de champ magnétique (10) autorisée permettant de balayer un support de données (2) en forme de carte et un circuit d'analyse et de commande (11) permettant d'analyser le signal de sortie de la tête de lecture de champ magnétique (10) autorisée et permettant de convertir les informations contenues dans le signal de sortie en un article de données numériques, avec un générateur de champ parasite (16) qui génère un champ parasite (18) magnétique qui est prévu pour exercer une influence parasite sur une deuxième tête de lecture de champ magnétique (14) ou tête de lecture non autorisée, éventuellement mise en place dans un but frauduleux dans la zone proche du dispositif de lecture (1), **caractérisé en ce que**
le générateur de champ parasite (16) comporte un modèle (25) de technique de signalisation, qui est réalisé pour simuler l'influence du champ parasite (18) sur le signal de sortie ou signal cumulé de la tête de lecture de champ magnétique (10) autorisée, et cette simulation modèle pour la compensation de l'influence du champ parasite (18) sur le signal de sortie ou signal cumulé de la tête de lecture de champ magnétique (10) autorisée et donc pour la reconstruction d'un signal utile dépendant d'un support de données (2) en forme de carte introduit est réalisée à partir du signal de sortie ou signal cumulé de la tête de lecture de champ magnétique (10) autorisée.

15. Dispositif de protection contre les fraudes selon la revendication 14, **caractérisé en ce que** le générateur de champ parasite (16) comporte au moins une bobine à champ parasite (17) qui est positionnée dans la zone proche d'une ouverture d'introduction (6) pour un support de données (2) en forme de carte et qui est alimentée par un signal de commande parasite non périodique, stochastique, en particulier pseudo-aléatoire.

16. Dispositif de protection contre les fraudes selon la revendication 14, **caractérisé en ce que** la puissance volumique spectrale d'un signal de commande parasite du générateur de champ parasite (16) à l'intérieur d'une bande de fréquences prédéterminée, laquelle bande de fréquences comprend au moins une partie de la plage de fréquence usuelle du signal utile lors de la lecture du support de données (2) en forme de carte, est nettement plus élevée qu'à l'extérieur de cette bande de fréquences prédéterminée.

17. Dispositif de protection contre les fraudes selon la revendication 14, **caractérisé en ce que** des parties essentielles pour le traitement des signaux, en particulier le modèle (25) de technique de signalisation pour la compensation de l'influence du champ parasite, sont constituées par un système de balayage discret qui comporte au moins un processeur, en particulier une unité de processeur de signalisation (21), un convertisseur analogique/numérique (19) et un convertisseur numérique/analogique (19').

18. Dispositif de protection contre les fraudes selon la revendication 14, **caractérisé en ce que** le modèle (25) de technique de signalisation est constitué par un filtre modèle (25a) numérique, en particulier par un filtre RIF.

19. Dispositif de protection contre les fraudes selon la revendication 14, **caractérisé en ce que** le générateur de champ parasite (16) comporte une mémoire (30) non volatile pour stocker au moins un article de paramètres de filtrage d'un filtre modèle (25a) numérique.

20. Dispositif de protection contre les fraudes selon la revendication 19, **caractérisé en ce que** ledit au moins un article de paramètres de filtrage définit un filtre modèle (25a) qui, à l'état non manipulé et de bon fonctionnement du dispositif de lecture (1), simule le comportement de transmission ou la caractéristique de transmission pour le signal de commande parasite émis via la bobine à champ parasite (17) et détecté ensuite à nouveau via la tête de lecture de champ magnétique (10) autorisée.

21. Dispositif de protection contre les fraudes selon la revendication 20, **caractérisé en ce que** le filtre modèle (25a) en cours de service est adapté en continu ou à intervalles réguliers et est ajusté en continu à un comportement de transmission variable de la voie de transmission réelle, et ledit au moins un article de paramètres de filtrage mémorisé est comparé, au moins de manière répétitive, à l'article de paramètres de filtrage du filtre modèle (25a) adapté et, en présence de divergences qualifiées, le dispositif de protection contre les fraudes est configuré pour délivrer une information d'état ou d'erreur pour une commande prioritaire de l'appareil.

22. Dispositif de protection contre les fraudes selon la revendication 14, **caractérisé en ce qu'**il est prévu au moins une bobine à champ parasite (22) supplémentaire, et les bobines à champ parasite (17, 22) sont réalisées selon un agencement dans l'espace différent ou un alignement différent ou des géométries différentes des champs magnétiques et sont disposées en particulier à proximité d'un ouverture d'introduction (6) pour le support de données (2) en forme de carte et sont alimentées par des signaux de commande parasites stochastiques, non corrélés entre eux.

23. Dispositif de protection contre les fraudes selon la revendication 14, **caractérisé en ce que** la bobine à champ parasite (17) et la tête de lecture de champ magnétique (10) sont combinées pour former une unité commune.

24. Dispositif de lecture pour la lecture autorisée d'informations mémorisées magnétiquement sur un support de données (2) en forme de carte, **caractérisé en ce que** ledit dispositif de lecture (1) comporte un dispositif de protection contre les fraudes selon la revendication 14.

25. Dispositif de lecture selon la revendication 24, **caractérisé en ce que** le Dispositif de protection contre les fraudes est configuré pour un verrouillage automatique d'une ouverture d'introduction (6) pour des supports de données (2) en forme de carte, chaque fois qu'une fonction erronée ou une manipulation frauduleuse est constatée par le générateur de champ parasite (16) du dispositif de lecture (1).

26. Distributeur automatique de services bancaires ou système de contrôle d'accès, **caractérisé en ce que** ledit distributeur automatique de services bancaires ou ledit système de contrôle d'accès comportent un dispositif de lecture selon la revendication 24.

27. Procédé selon la revendication 1, **caractérisé par** un cryptage du signal utile ou des données de celui-ci dans le dispositif de lecture (1), par une transmission du signal utile crypté ou des données de celui-ci, et par un décryptage du signal utile ou des données de celui-ci dans une unité électronique autorisée, montée en périphérie.

28. Procédé selon la revendication 27, **caractérisé par** un cryptage du signal utile ou des données de celui-ci au moyen d'une unité de processeur de signalisation (21) qui, par ailleurs, est configurée pour compenser ou éliminer par filtrage l'influence du champ parasite (18) de la bobine à champ parasite (17).
